(19) **Europäisches Patentamt / European Patent Office / Office européen des brevets**

(11) **EP 4 376 449 A2**

(12) # EUROPEAN PATENT APPLICATION

(43) Date of publication:
**29.05.2024   Bulletin 2024/22**

(21) Application number: **24152527.8**

(22) Date of filing: **10.03.2021**

(51) International Patent Classification (IPC):
***H04W 4/40*** *(2018.01)*

(52) Cooperative Patent Classification (CPC):
**H04W 76/28; H04L 1/1822; H04L 1/1851;
H04L 1/1864; H04L 1/1896; H04W 52/0216;
H04W 52/0219; H04W 52/0229; H04W 52/0274;**
H04L 1/0027; H04L 1/1893; H04W 4/46;
H04W 76/14; H04W 92/18; Y02D 30/70

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **10.03.2020   CN 202010162922**

(62) Document number(s) of the earlier application(s) in
accordance with Art. 76 EPC:
**21769040.3 / 4 106 358**

(71) Applicant: **Huawei Technologies Co., Ltd.
Shenzhen, Guangdong 518129 (CN)**

(72) Inventors:
 • **FAN, Qiang
   Shenzhen, 518129 (CN)**
 • **WANG, Jun
   Shenzhen, 518129 (CN)**
 • **PENG, Wenjie
   Shenzhen, 518129 (CN)**
 • **LI, Xiangyu
   Shenzhen, 518129 (CN)**

(74) Representative: **Pfenning, Meinig & Partner mbB
Patent- und Rechtsanwälte
Theresienhöhe 11a
80339 München (DE)**

Remarks:
•This application was filed on 18-01-2024 as a
divisional application to the application mentioned
under INID code 62.
•Claims filed after the date of filing of the application
/ after the date of receipt of the divisional application
(Rule 68(4) EPC)

(54)   ## WIRELESS COMMUNICATION METHOD AND COMMUNICATION APPARATUS

(57)   This application provides a communication method. The method includes: A first terminal device determines first configuration information of first discontinuous reception DRX, where the first DRX is used to control the first terminal device to receive data on a sidelink; and the first terminal device sends the first configuration information to a second terminal device, where the second terminal device is a terminal device that establishes a sidelink connection to the first terminal device. This can reduce power consumption of the terminal device.

EP 4 376 449 A2

## Description

This application claims priority to Chinese Patent Application No. 202010162922.8, filed with the China National Intellectual Property Administration on March 10, 2020 and entitled "WIRELESS COMMUNICATION METHOD AND COMMUNICATION APPARATUS", which is incorporated herein by reference in its entirety.

## TECHNICAL FIELD

This application relates to the communication field, and more specifically, to a wireless communication method and a communication apparatus.

## BACKGROUND

Vehicle-to-everything (vehicle-to-everything, V2X) is considered as one of the most promising fields with clearest market requirements in the Internet of Things system. V2X features a wide application scope, great industry potential, and strong social benefits, and is of great significance to promote the innovation and development of the automobile and information communication industry, build new models and new forms of automobile and transportation services, promote the innovation and application of autonomous driving technologies, and improve transportation efficiency and safety. Development of an intelligent transportation system promotes development of an Internet of vehicles (Internet of vehicles, IoV) from a conventional Internet of Vehicles that supports only an in-vehicle information service to a next-generation Internet of Vehicles that supports a vehicle-to-everything (vehicle to everything, V2X) service. Applications of a V2X system include: vehicle-to-vehicle (vehicle to vehicle, V2V), vehicle-to-infrastructure (vehicle to infrastructure, V2I), vehicle-to-pedestrian (vehicle to pedestrian, V2P), vehicle to network (vehicle to network, V2N), and the like. The application of the V2X system improves driving safety, reduces congestion and vehicle energy consumption, improves transportation efficiency, provides in-vehicle entertainment information, and so on. A related communication standard for V2X is introduced in a long term evolution (long term evolution, LTE) system of the 3rd generation partnership project (the 3rd generation partnership project, 3GPP). V2X is also a hot topic for discussion in a new radio (new radio, NR) system. NR-V2X needs to support a variety of more complex scenarios, for example, unicast, broadcast, and multicast scenarios. With expansion of application scenarios and service requirements, a higher requirement is imposed on power consumption of a device in V2X.

## SUMMARY

This application provides a wireless communication method and a communication apparatus, to reduce power consumption of a terminal device.

According to a first aspect, a wireless communication method is provided. The method may be performed by a first terminal device or a module (for example, a chip) disposed on (or configured to) the first terminal device. The following uses an example in which the method is performed by the first terminal device.

The method includes: The first terminal device determines first configuration information of first discontinuous reception DRX, where the first DRX is used to control the first terminal device to receive data on a sidelink; and the first terminal device sends the first configuration information to a second terminal device, where the second terminal device is a terminal device that establishes a sidelink connection to the first terminal device.

According to this solution in this application, a receiving device performing a DRX operation may determine, based on a status of a sidelink connection established by the receiving device performing a DRX operation, DRX operation configuration information used for the sidelink, so that communication reliability of the receiving device may be ensured, and power consumption of the terminal device may be reduced. The receiving device performing a DRX operation may notify a sending device of the receiving device's DRX operation configuration information used for the sidelink, so that the receiving device for performing a DRX operation and the sending device may reach a consensus on the DRX operation, to ensure reliability of data transmission.

With reference to the first aspect, in some implementations of the first aspect, the first configuration information includes one or more of the following information elements: a first DRX cycle, a start offset of the first DRX, a slot offset of the first DRX, information about a first timer, or information about a second timer. For example, the information about the first timer is used to configure DRX activation duration in each first DRX cycle, and the information about the second timer is used to configure DRX activation duration after the first terminal device receives sidelink transmission.

According to this solution in this application, the receiving device performing a DRX operation may notify the sending device of the receiving device's DRX cycle, the start offset, and the information related to the timer used for the sidelink, so that the receiving device performing a DRX operation and the sending device may reach a consensus on the DRX operation, to ensure reliability of data transmission.

With reference to the first aspect, in some implementations of the first aspect, that the first terminal device determines first configuration information of first discontinuous reception DRX includes: The first terminal device determines the first configuration information from one or more pieces of configuration information of the first DRX. For example, the one or more pieces of configuration information is preset for a first terminal device or is configured by a network device for the first terminal device.

With reference to the first aspect, in some implementations of the first aspect, that the first terminal device determines the first configuration information from one or more pieces of configuration information of the first DRX includes:

The first terminal device determines the first configuration information from one or more pieces of DRX configuration information used for sidelink based on a QoS requirement of a sidelink service.

According to this solution in this application, the receiving device performing a DRX operation may determine, based on the QoS requirement of the sidelink service, the DRX configuration information used for the sidelink. Therefore, power consumption may be reduced while a data transmission requirement is met.

With reference to the first aspect, in some implementations of the first aspect, the method further includes:

The first terminal device receives second configuration information of the first DRX that is sent by the second terminal device, where the second configuration information includes configuration information related to a hybrid automatic repeat request HARQ.

According to this solution in this application, a sending device for performing a DRX operation used for the sidelink may notify the receiving device of the HARQ-related DRX operation configuration information used for the sidelink, so that proper timer duration may be determined based on a workload, to save energy.

With reference to the first aspect, in some implementations of the first aspect, when one or more of the following conditions are met, the first terminal device starts to perform a first DRX operation:

after the first configuration information is sent;
after an acknowledgment feedback that the second terminal device receives the first configuration information is received;
after first indication information is sent to the second terminal device, where the first indication information indicates to start performing the first DRX;
after the second configuration information that is sent by the second terminal device is received; and
after an acknowledgment feedback that the second configuration information is received is sent to the second terminal device.

For example, the second configuration information includes the HARQ-related configuration information.

According to this solution in this application, the moment of starting to perform the DRX operation used for the sidelink may be defined, so that the receiving device performing a DRX operation and the sending device may reach a consensus on the moment of starting to perform the DRX operation, to ensure data transmission reliability.

With reference to the first aspect, in some implementations of the first aspect, the second configuration information includes information about a third timer and/or information about a fourth timer. For example, the information about the third timer indicates minimum duration of next data retransmission in a same HARQ process, and the information about the fourth timer indicates maximum duration of detecting and/or receiving retransmitted data.

According to this solution in this application, the sending device for performing a DRX operation used for the sidelink may notify the receiving device of the HARQ-related DRX operation configuration information used for the sidelink, so that proper timer duration may be determined based on a workload, to save energy.

With reference to the first aspect, in some implementations of the first aspect, the first terminal device stores the second configuration information in context information of the second terminal device.

With reference to the first aspect, in some implementations of the first aspect, after the first terminal device starts to perform a first DRX operation, in one or more of the following cases, the first terminal device is in the DRX activation time: a running period of the first timer, a running period of the second timer, a running period of the fourth timer, a moment of receiving HARQ feedback of the sidelink, a time range of a data retransmission resource, a waiting period of receiving a channel state information CSI report, or a moment when receiving a unicast establishment request and before completing unicast establishment, or after receiving the unicast establishment request.

According to this solution in this application, the DRX activation time may be specified, so that the receiving device performing a DRX operation and the sending device may reach a consensus on the DRX activation time, to ensure data transmission reliability.

With reference to the first aspect, in some implementations of the first aspect, that the first terminal device sends the first configuration information to a second terminal device includes: The first terminal device sends the first configuration information to a plurality of second terminal devices. The first terminal device receives second configuration information of the first DRX that is sent by the second terminal device includes: The first terminal device receives a plurality of pieces of second configuration information sent by the plurality of second terminal devices, where the plurality of pieces of second configuration information one-to-one correspond to the plurality of second terminal devices. For example, the second configuration information specifically includes configuration information related to a HARQ process of the second terminal device.

According to this solution in this application, the receiving device performing a DRX operation may maintain, based on the status of the sidelink connection established by the receiving device performing a DRX operation, common DRX operation configuration information used for the sidelink for a plurality of sending devices.

With reference to the first aspect, in some implementations of the first aspect, when identifiers of two second terminal devices in the plurality of second terminal devices are both first identifiers, the method further includes: The first terminal device sends second indication information to one of the two second terminal devices, where the second indication information indicates the one second terminal device to update the identifier; when communicating with the one of the two second terminal devices, the first terminal device updates an identifier of the first terminal device into a second identifier; and the first terminal device sends third indication information to the one second terminal device, where the third indication information indicates to update the identifier of the first terminal device into the second identifier.

According to the foregoing solution, a problem that the terminal device cannot determine actual data of the sending device or the receiving device due to an identifier conflict may be resolved, and so that reliability of a communication process may be improved.

According to a second aspect, a communication method is provided. The method may be performed by a second terminal device or a module (for example, a chip) disposed on (or configured to) the second terminal device. The following uses an example in which the method is performed by the second terminal device.

The method includes: The second terminal device receives first configuration information of first discontinuous reception DRX that is sent by a first terminal device, where the first DRX is used to control the first terminal device to receive data on a sidelink; and the second terminal device sends data on the sidelink to the first terminal device based on the first configuration information.

With reference to the second aspect, in some implementations of the second aspect, the first configuration information includes one or more of the following information elements: a first DRX cycle, a start offset of the first DRX, a slot offset of the first DRX, information about a first timer, or information about a second timer, where the information about the first timer is used to configure DRX activation duration in each first DRX cycle, and the information about the second timer is used to configure DRX activation duration after the first terminal device receives control information for scheduling newly transmitted data.

With reference to the second aspect, in some implementations of the second aspect, the method further includes: The second terminal device sends second configuration information of the first DRX to the first terminal device, where the second configuration information includes configuration information related to a hybrid automatic repeat request HARQ.

With reference to the second aspect, in some implementations of the second aspect, the second configuration information includes information about a third timer and/or information about a fourth timer, where the information about the third timer indicates minimum duration of next data retransmission in a same HARQ process, and the information about the fourth timer indicates maximum duration of detecting and/or receiving retransmitted data.

With reference to the second aspect, in some implementations of the second aspect, the second configuration information is preset for a second terminal device or is configured by a network device for the second terminal device; or the second configuration information is determined by the second terminal device based on information related to the second terminal device, and the related information includes one or more of a channel busy ratio CBR, a speed, and a QoS requirement of a service.

With reference to the second aspect, in some implementations of the second aspect, the second terminal device stores the first configuration information in context information of the first terminal device.

With reference to the second aspect, in some implementations of the second aspect, the method further includes:

When one or more of the following conditions are met, the second terminal device starts to perform a first DRX operation:

after the first configuration information is received;
after an acknowledgment feedback that the second terminal device receives the first configuration information is sent;
after first instruction information is received, where the first instruction information indicates to activate the first DRX;
after the second configuration information is sent to the first terminal device; and
after an acknowledgment feedback that the second configuration information is received and that is sent by the first terminal device is received.

For example, the second configuration information includes the HARQ-related configuration information. With reference to the second aspect, in some implementations of the second aspect, the method further includes:

The second terminal device determines that the first terminal device is in DRX activation time in one or more of the following cases, and the second terminal device sends data to the first terminal device when the first terminal device is in a receiving state:

a running period of the first timer, a running period of the second timer, a running period of the fourth timer, a moment of receiving HARQ feedback of the sidelink, a time range of a data retransmission resource, a waiting period of receiving a channel state information CSI report, or a moment when receiving a unicast establishment request and before completing unicast establishment, or before starting to perform the first DRX operation.

With reference to the second aspect, in some implementations of the second aspect, the method further includes: The second terminal device receives second indication information that is sent by the first terminal device, where the second indication information indicates the second terminal device to update an identifier; or the second terminal device receives third indication information that is sent by the first terminal device, where the third indication information indicates to update an identifier of the first terminal device into a second identifier.

With reference to the second aspect, in some implementations of the second aspect, the second terminal device sends the first configuration information and/or the second configuration information to the network device.

According to a third aspect, a communication method is provided. The method may be performed by a network device or a module (for example, a chip) disposed on (or configured to) the network device. The following uses an example in which the method is performed by the network device.

The method includes: The network device receives first configuration information and/or second configuration information that are/is sent by a second terminal device, where the first configuration information and/or the second configuration information are/is configuration information of first DRX, the first DRX is used to control the first terminal device to receive data on a sidelink, the first configuration information is configuration information of the first DRX that is determined by the first terminal device, and the second configuration information is configuration information of the first DRX that is determined by the second terminal device; and the network device sends fourth indication information to the second terminal device, where the fourth indication information indicates a first time-frequency resource, the first time-frequency resource is a resource used by the second terminal device to send data to the first terminal device, and the first time-frequency resource is in activation time of the first DRX of the first terminal device.

With reference to the third aspect, in some implementations of the third aspect, the first configuration information includes one or more of the following information elements: a first DRX cycle, a start position offset of the first DRX, information about a first timer, or information about a second timer. For example, the information about the first timer indicates DRX activation duration in each first DRX cycle, and the information about the second timer indicates DRX activation duration after the first terminal device receives control information for scheduling newly transmitted data.

With reference to the third aspect, in some implementations of the third aspect, the second configuration information includes information about a third timer and/or information about a fourth timer, where the information about the third timer indicates minimum duration of next data retransmission in a same HARQ process, and the information about the fourth timer indicates maximum duration of detecting and/or receiving retransmitted data.

With reference to the third aspect, in some implementations of the third aspect, the method further includes: The network device sends one or more pieces of configuration information to the first terminal device, where the one or more pieces of configuration information includes the first configuration information; and/or the network device sends one or more pieces of fourth configuration information to the second terminal device, where the one or more pieces of fourth configuration information includes the second configuration information.

According to a fourth aspect, a communication method is provided. The method may be performed by a terminal device or a module (for example, a chip) disposed on (or configured to) the terminal device. The following uses an example in which the method is performed by the terminal device.

The method includes: A terminal device determines, based on a destination identifier of a broadcast service or a multicast service, a first resource that is used to carry data of the broadcast service or the multicast service, where the first terminal device receives or sends data of the broadcast service or the multicast service on the first resource.

According to this solution in this application, the receiving device can determine resource location of the broadcast or multicast information based on a broadcast or multicast source device identifier, so that the terminal device may be prevented from monitoring the broadcast or multicast information on all sidelink resources; therefore, energy of the terminal device may be saved.

With reference to the fourth aspect, in some implementations of the fourth aspect, that a first terminal device determines, based on a destination identifier of the broadcast service or the multicast service, a first resource that is used to carry data of the broadcast service or the multicast service includes:

The first terminal device determines, based on the destination identifier of the broadcast service or the multicast service and a third mapping relationship, the first resource that is used to carry the data of the broadcast service or the multicast service, where the third mapping relationship includes one or more of the following:

destination identifier mod N1 = (time domain resource number/K1) mod M1; and

destination identifier mod N2 = (frequency domain resource number/K2) mod M2, where
mod represents a modulo value, and one or more of N1, N2, K1, K2, M1, or M2 are parameter values that are predefined in a protocol, configured by a network device by using an RRC dedicated message, or configured by the network device by using a system message.

According to a fifth aspect, a communication apparatus is provided. The apparatus includes a processing unit, configured to determine first configuration information of first discontinuous reception DRX, where the first DRX is used to control the first terminal device to receive data on a sidelink; and a transceiver unit, configured to send the first configuration information to a second terminal device, where the second terminal device is a terminal device that establishes a sidelink connection to the first terminal device.

With reference to the fifth aspect, in some implementations of the fifth aspect, the first configuration information includes one or more of the following information elements: a first DRX cycle, a start offset of the first DRX, a slot offset of the first DRX, information about a first timer, or information about a second timer. For example, the information about the first timer is used to configure DRX activation duration in each first DRX cycle, and the information about the second timer is used to configure DRX activation duration after the first terminal device receives sidelink transmission.

With reference to the fifth aspect, in some implementations of the fifth aspect, the processing unit is specifically configured to determine the first configuration information from one or more pieces of configuration information of the first DRX. For example, the one or more pieces of configuration information is preset for a first terminal device or is configured by a network device for the first terminal device.

With reference to the fifth aspect, in some implementations of the fifth aspect, the processing unit is specifically configured to determine the first configuration information from one or more pieces of DRX configuration information used for sidelink based on a QoS requirement of a sidelink service.

With reference to the fifth aspect, in some implementations of the fifth aspect, the apparatus includes a transceiver unit, configured to receive second configuration information of the first DRX that is sent by a second terminal device, where the second configuration information includes configuration information related to a hybrid automatic repeat request HARQ.

With reference to the fifth aspect, in some implementations of the fifth aspect, when one or more of the following conditions are met, the first terminal device starts to perform a first DRX operation:

after the first configuration information is sent;
after an acknowledgment feedback that the second terminal device receives the first configuration information is received;
after first indication information is sent to the second terminal device, where the first indication information indicates to start performing the first DRX;
after the second configuration information that is sent by the second terminal device is received; and
after an acknowledgment feedback that the second configuration information is received is sent to the second terminal device.

For example, the second configuration information includes the HARQ-related configuration information.

With reference to the fifth aspect, in some implementations of the fifth aspect, the second configuration information includes information about a third timer and/or information about a fourth timer. For example, the information about the third timer indicates minimum duration of next data retransmission in a same HARQ process, and the information about the fourth timer indicates maximum duration of detecting and/or receiving retransmitted data.

With reference to the fifth aspect, in some implementations of the fifth aspect, the processing unit is configured to store the second configuration information in context information of the second terminal device.

With reference to the fifth aspect, in some implementations of the fifth aspect, after the first terminal device starts to perform a first DRX operation, in one or more of the following cases, the first terminal device is in the DRX activation time: a running period of the first timer, a running period of the second timer, a running period of the fourth timer, a moment of receiving HARQ feedback of the sidelink, a time range of a data retransmission resource, a waiting period of receiving a channel state information CSI report, or a moment when receiving a unicast establishment request, and before completing unicast establishment, or after receiving the unicast establishment request.

With reference to the fifth aspect, in some implementations of the fifth aspect, the transceiver unit is specifically configured to send the first configuration information to a plurality of second terminal devices, and the transceiver unit is specifically configured to receive the plurality of pieces of second configuration information sent by the plurality of second terminal devices, where the plurality of pieces of second configuration information one-to-one corresponds with the plurality of second terminal devices. For example, the second configuration information specifically includes configuration information related to a HARQ process of the second terminal device.

With reference to the fifth aspect, in some implementations of the fifth aspect, when identifiers of two second terminal devices in the plurality of second terminal devices are both first identifiers, the transceiver unit is further configured to send second indication information to one of the two second terminal devices, where the second indication information indicates the one second terminal device to update the identifier.

Alternatively, when communicating with the one of the two second terminal devices, the processing unit is further configured to update an identifier of the first terminal device into a second identifier.

The transceiver unit is further configured to send third indication information to the one second terminal device, where the third indication information indicates to update the identifier of the first terminal device into the second identifier.

According to a sixth aspect, a communication apparatus is provided. The apparatus includes: a transceiver unit, configured to receive first configuration information of first discontinuous reception DRX that is sent by the first terminal device, where the first DRX is used to control the first terminal device to receive data on a sidelink; and a processing unit, configured to send the data on the sidelink to the first terminal device based on the first configuration information.

With reference to the sixth aspect, in some implementations of the sixth aspect, the first configuration information includes one or more of the following information elements: a first DRX cycle, a start offset of the first DRX, a slot offset of the first DRX, information about a first timer, or information about a second timer, where the information about the first timer is used to configure DRX activation duration in each first DRX cycle, and the information about the second timer is used to configure DRX activation duration after the first terminal device receives control information for scheduling newly transmitted data.

With reference to the sixth aspect, in some implementations of the sixth aspect, the transceiver unit is further configured to send second configuration information of the first DRX to the first terminal device, where the second configuration information includes configuration information related to a hybrid automatic repeat request HARQ.

With reference to the sixth aspect, in some implementations of the sixth aspect, the second configuration information includes information about a third timer and/or information about a fourth timer. For example, the information about the third timer indicates minimum duration of next data retransmission in a same HARQ process, and the information about the fourth timer indicates maximum duration of detecting and/or receiving retransmitted data.

With reference to the sixth aspect, in some implementations of the sixth aspect, the second configuration information is preset for a second terminal device or is configured by a network device for the second terminal device. Alternatively, the second configuration information is determined by the second terminal device based on information related to the second terminal device, and the related information includes one or more of a channel busy ratio CBR, a speed, and a QoS requirement of a service.

With reference to the sixth aspect, in some implementations of the sixth aspect, the processing unit is further configured to store the first configuration information in context information of the first terminal device.

With reference to the sixth aspect, in some implementations of the sixth aspect, when one or more of the following conditions are met, the second terminal device starts to perform a first DRX operation:

after the first configuration information is received;
after an acknowledgment feedback that the second terminal device receives the first configuration information is sent;
after first instruction information is received, where the first instruction information indicates to activate the first DRX;
after the second configuration information is sent to the first terminal device; and
after an acknowledgment feedback that the second configuration information is received and that is sent by the first terminal device is received.

For example, the second configuration information includes the HARQ-related configuration information.

With reference to the sixth aspect, in some implementations of the sixth aspect, the processing unit is further configured to determine that the first terminal device is in the DRX activation time in one or more of the following cases, and the second terminal device sends data to the first terminal device when the first terminal device is in a receiving state: a running period of the first timer, a running period of the second timer, a running period of the fourth timer, a moment of receiving HARQ feedback of the sidelink, a time range of a data retransmission resource, a waiting period of receiving a channel state information CSI report, a moment when receiving a unicast establishment request and before completing unicast establishment, or after a moment of starting to perform the first DRX operation.

With reference to the sixth aspect, in some implementations of the sixth aspect, the transceiver unit is further configured to receive second indication information that is sent by the first terminal device, where the second indication information indicates the second terminal device to update an identifier; or the transceiver unit is further configured to receive third indication information that is sent by the first terminal device, where the third indication information indicates to update an identifier of the first terminal device into a second identifier.

With reference to the sixth aspect, in some implementations of the sixth aspect, the second terminal device sends the first configuration information and/or the second configuration information to the network device.

According to a seventh aspect, a communication apparatus is provided. The apparatus includes: a transceiver unit, configured to receive first configuration information and/or second configuration information that are/is sent by a second terminal device, where the first configuration information and/or the second configuration information are/is configuration information of first DRX, the first DRX is used to control the first terminal device to receive data on a sidelink, the first configuration information is configuration information of the first DRX that is determined by the first terminal device, and the second configuration information is configuration information of the first DRX that is determined by the second terminal device; and a processing unit, configured to determine a first time-frequency resource, where the first time-frequency resource is a resource used by the second terminal device to send data to the first terminal device, and the first time-frequency resource is in activation time of the first DRX of the first terminal device. The transceiver unit is further configured to send fourth indication information to the second terminal device, where the fourth indication information indicates the first time-frequency resource.

With reference to the seventh aspect, in some implementations of the seventh aspect, the first configuration information includes one or more of the following information elements: a first DRX cycle, a start position offset of the first DRX, information about a first timer, or information about a second timer. For example, the information about the first timer indicates DRX activation duration in each first DRX cycle, and the information about the second timer indicates DRX activation duration after the first terminal device receives control information for scheduling newly transmitted data.

With reference to the seventh aspect, in some implementations of the seventh aspect, the second configuration information includes information about a third timer and/or information about a fourth timer, where the information about the third timer indicates minimum duration of next data retransmission in a same HARQ process, and the information about the fourth timer indicates maximum duration of detecting and/or receiving retransmitted data.

According to an eighth aspect, a communication apparatus is provided. The apparatus includes: a processing unit, configured to determine, based on a destination identifier of a broadcast service or a multicast service, a first resource that is used to carry data of the broadcast service or the multicast service; and a transceiver unit, configured to receive or send data of the broadcast service or the multicast service on the first resource.

With reference to the eighth aspect, in some implementations of the eighth aspect, the processing unit is specifically configured to determine, based on the destination identifier of the broadcast service or the multicast service and a third mapping relationship, the first resource that is used to carry the data of the broadcast service or the multicast service, where the third mapping relationship includes one or more of the following:

destination identifier mod N1 = (time domain resource number/K1) mod M1; and
destination identifier mod N2 = (frequency domain resource number/K2) mod M2, where
mod represents a modulo value, and one or more of N1, N2, K1, K2, M1, or M2 are parameter values that are predefined in a protocol, configured by a network device by using an RRC dedicated message, or configured by the network device by using a system message.

According to a ninth aspect, a communication apparatus is provided. The apparatus includes a processor. The processor is coupled to a memory, and configured to perform the method according to the first aspect, the second aspect, or the fourth aspect and any possible implementation of the first aspect, the second aspect, or the fourth aspect. Optionally, the communication apparatus further includes the memory. Optionally, the communication apparatus further includes a communication interface. The processor is coupled to the communication interface.

In an implementation, the communication apparatus is a first terminal device or a second terminal device. When the communication apparatus is the terminal device or the second terminal device, the communication interface may be a transceiver or an input/output interface.

In another implementation, the communication apparatus is a chip configured in the first terminal device or the second terminal device. When the communication apparatus is the chip configured in the first terminal device or the second terminal device, the communication interface may be the input/output interface.

Optionally, the transceiver may be a transceiver circuit. Optionally, the input/output interface may be an input/output circuit.

According to a tenth aspect, a communication apparatus is provided. The apparatus includes a processor. The processor is coupled to a memory, and configured to execute instructions in the memory, to perform the method according to any one of the third aspect and the possible implementations of the third aspect. Optionally, the communication apparatus further includes the memory. Optionally, the communication apparatus further includes a communication interface. The processor is coupled to the communication interface.

In an implementation, the communication apparatus is a network device. When the communication apparatus is the network device, the communication interface may be a transceiver or an input/output interface.

In another implementation, the communication apparatus is a chip configured in the network device. When the communication apparatus is the chip configured in the network device, the communication interface may be the input/output interface.

Optionally, the transceiver may be a transceiver circuit. Optionally, the input/output interface may be an input/output circuit.

According to an eleventh aspect, a processor is provided. The processor includes an input circuit, an output circuit, and a processing circuit. The processing circuit is configured to: receive a signal through the input circuit, and transmit the signal through the output circuit, to enable the processor to perform the method according to any one of the first aspect to the fourth aspect and the possible implementations of the first aspect to the fourth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a twelfth aspect, a processing apparatus is provided. The processing apparatus includes a processor and a memory. The processor is configured to: read instructions stored in the memory, receive a signal through a receiver, and transmit a signal through a transmitter, to perform the method according to any one of the first aspect to the fourth aspect and the possible implementations of the first aspect to the fourth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processing apparatus in the twelfth aspect may be one or more chips. The processor in the processing apparatus may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in a memory. The memory may be integrated into the processor, or may be located outside the processor and exist independently.

According to a thirteenth aspect, a computer program product is provided. The computer program product includes a computer program (which may also be referred to as code or instructions). When the computer program is run on a computer, the computer is enabled to perform the method according to any one of the first aspect to the fourth aspect and the possible implementations of the first aspect to the fourth aspect.

According to a fourteenth aspect, a computer-readable medium is provided. The computer-readable medium stores a computer program (which may also be referred to as code or instructions). When the computer program is run on a computer, the computer is enabled to perform the method according to any one of the first aspect to the fourth aspect and the possible implementations of the first aspect to the fourth aspect.

According to a fifteenth aspect, a communication system is provided. The communication system includes at least one of the first terminal device, second terminal device, or the network device.

## BRIEF DESCRIPTION OF DRAWINGS

FIG. 1 is a schematic diagram of an architecture of a communication system applicable to an embodiment of this application;

FIG. 2 is a schematic diagram of another architecture of a communication system applicable to this application;

FIG. 3 is a schematic diagram of an example of a wireless communication method according to an embodiment of this application;

FIG. 4 is a schematic flowchart of another example of a wireless communication method according to an embodiment of this application;

FIG. 5 is a schematic diagram of another example of a wireless communication method according to an embodiment of this application;

FIG. 6 is a schematic diagram of an example of a time domain resource number according to an embodiment of this application;

FIG. 7 is a schematic diagram of another example of a time domain resource number according to an embodiment of this application;

FIG. 8 is a schematic block diagram of an example of a communication apparatus according to this application;

FIG. 9 is a schematic diagram of a structure of a terminal device according to this application; and

FIG. 10 is a schematic diagram of a structure of a network device according to this application.

## DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system or a new radio (new radio, NR) system, a vehicle-to-everything (Vehicle-to-X, V2X) system, where V2X may include vehicle to network (vehicle to network, V2N), vehicle to vehicle (vehicle to Vehicle, V2V), vehicle to infrastructure (vehicle to infrastructure, V2I), vehicle to pedestrian (vehicle to pedestrian, V2P), and the like; a long term evolution-vehicle (Long Term Evolution-Vehicle, LTE-V) system, an internet of vehicle system, a machine type communication (machine type communication, MTC) system, an internet of things (Internet of Things, IoT) system, a long term evolution-machine (Long Term Evolution-Machine, LTE-M) system, a machine to machine (Machine to Machine, M2M) system, and a non-terrestrial communication (non-terrestrial network, NTN) system, and another future evolved communication system, or the like.

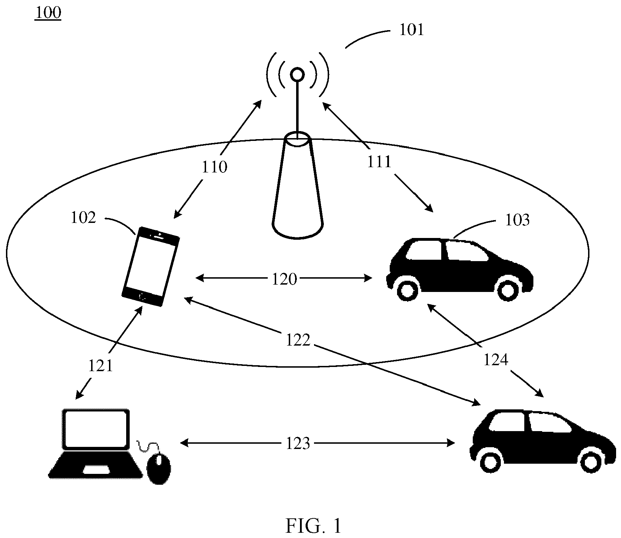

FIG. 1 is a schematic diagram of a communication system 100 according to an embodiment of this application.

The communication system applicable to this embodiment of this application may include at least two terminal devices, for example, terminal devices 102, 103, 104, and 105 in the communication system 100 shown in FIG. 1. The communication system applicable to this embodiment of this application may further include at least one network device, for example, a network device 101 in the wireless communication system 100 shown in FIG. 1. A sidelink (sidelink, SL), for example, links 120, 121, 122, 123, and 124 in FIG. 1, may be established between the at least two terminal devices. The terminal devices between which the sidelink is established may directly communicate with each other. One terminal device may establish a sidelink to one or more terminal devices. The terminal device may perform a discontinuous reception (discontinuous reception, DRX) operation, and the terminal device may receive, in DRX activation time, data that is sent by the one or more terminal devices to which this terminal device establishes the sidelink. The terminal device in the communication system may also establish a wireless connection to the network device for data communication. The terminal devices 102 and 103 shown in FIG. 1 respectively establish radio links 110 and 111 to the network device. Alternatively, the terminal device in the communication system, for example, the terminal devices 104 and 105 shown in FIG. 1, may not establish a radio link to the network device. This is not limited in this application.

In the embodiments of this application, a terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device in embodiments of this application may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a vehicle-mounted communication apparatus, a vehicle-mounted communication processing chip, a wearable device, a terminal device in a 5G network, a terminal device in a future evolved public land mobile network (public land mobile network, PLMN), or the like.

The wearable device may also be referred to as a wearable intelligent device, and is a general term of wearable devices such as glasses, gloves, watches, clothes, and shoes that are developed by applying wearable technologies in intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, the wearable smart device has full functions and a large size, and can implement all or partial functions without depending on a smartphone, for example, a smart watch, smart glasses, or the like. In addition the wearable smart device focuses only on one type of application function, and needs to be used together with another device such as a smartphone, for example, various smart bands or smart jewelries that perform sign monitoring.

In addition, the terminal device may alternatively be a terminal device in an internet of things (internet of things, IoT) system. The IoT is an important part of future information technology development. A main technical feature of the IoT is to connect things to a network by using a communication technology, to implement an intelligent network for human-machine interconnection and thing-thing interconnection.

It should be understood that a specific form of the terminal device is not limited in this application.

The technical solutions in embodiments of this application may be further applied to a network device. The network device includes but is not limited to an evolved node B (evolved Node B, eNB), a radio network controller (radio network controller, RNC), a road side unit (road side unit, RSU), a node B (node B, NB), a base station controller (base station controller, BSC), a base transceiver station (base transceiver station, BTS), a home base station (for example, a home evolved node B, or a home node B, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the network device may be a gNB or a transmission point (TRP or TP) in a 5G (for example, NR) system, may be one antenna panel or a group (including a plurality of antenna panels) of antenna panels of a base station in a 5G system, or may be a network node, such as a baseband unit (BBU) or a distributed unit (distributed unit, DU), that constitutes a gNB or a transmission point. Alternatively, the network device may be a network side apparatus that provides a communication service or communication control for the terminal device in the internet of vehicles.

The network device provides a communication service for a terminal device in a cell. The terminal device in the cell communicates with the network device by using a transmission resource (for example, a frequency domain resource or a time domain resource) allocated by the network device. The cell may belong to a macro base station (for example, a macro eNB or a macro gNB).

To facilitate understanding of the embodiments of this application, terms used in this application are first briefly described.

1. A broadcast or multicast communication mode on a sidelink

Broadcast or multicast means that broadcast or multicast data sent by a sending device may be received by one or more terminal devices. For example, when service data is transmitted on a PC5 interface, a used destination layer-2 identifier (Destination Layer-2 ID) is predefined. The sending device may directly send broadcast service data through a user plane protocol stack, and fill a destination layer-2 ID corresponding to a broadcast service at a media access control (media access control protocol, MAC) layer and/or a physical (physical, PHY) layer. A terminal device interested in the broadcast service may monitor, at the PHY layer, whether there is service data of the destination layer-2 ID corresponding to the broadcast service, and receive and parse the service data. However, this application is not limited thereto.

2. A unicast communication mode on a sidelink

Unicast is a one-to-one communication manner of terminal devices. A sending device indicates, based on a destination address, a receiving device of unicast data that is sent by the sending device. The receiving device determines, based on the destination address of the unicast data, whether the unicast data is sent to the receiving device, and determines, based on a source address of the unicast data, a device that sends the unicast data. Optionally, the two terminal devices may establish a unicast connection between the two devices by signaling interaction. Unicast communication may be performed after the unicast connection is established.

3. Sidelink transmission mode 1 (mode 1)

The sidelink mode 1 means that a terminal device determines, based on a sidelink scheduling grant (sidelink scheduling grant) that is sent by a network device, a resource that is used to send sidelink data. The sidelink scheduling grant is used to grant the terminal device a dedicated resource for sending the sidelink data. For example, before sending a sidelink, the terminal device reports a buffer status report (buffer status report, BSR) to the network device, to notify the network device of a data amount to be sent. The network device grants, based on the data amount reported by the terminal device, a corresponding resource to the terminal device.

4. Sidelink transmission mode 2 (mode 2)

The sidelink mode 2 means that a network device pre-allocates a resource that is used for a sidelink, and a plurality of terminal devices may compete for a resource in the resource that is used for the sidelink. When obtaining the resource, the terminal device may send data on the sidelink in the obtained resource. For example, the terminal device selects, based on whether each time-frequency resource in the resource that is used for the sidelink, an unoccupied resource and transmit the resource. However, this application is not limited thereto.

The following describes in detail the communication method provided in the embodiments of this application with reference to the accompanying drawings.

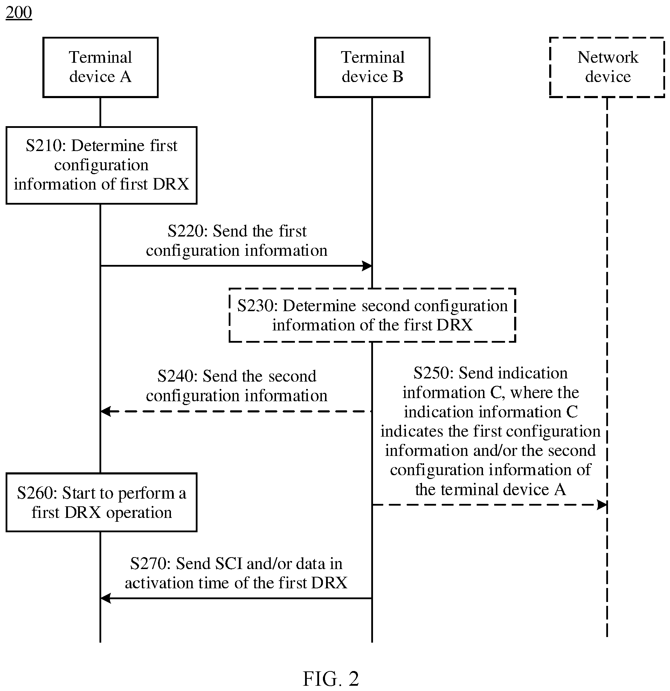

FIG. 2 is a schematic flowchart of a communication method according to an embodiment of this application.

S210: A terminal device A (namely, an example of a first terminal device) determines first configuration information of first DRX.

The first DRX is used to control the terminal device A to receive SCI and/or data on a sidelink.

In an implementation, the terminal device A may determine the first configuration information based on a quality of service (quality of service, QoS) requirement of a service. Alternatively, the terminal device A may determine, based on auxiliary information that is sent by a terminal device B (an example of a second terminal device) to the terminal device A, the first configuration information. Optionally, when the terminal device A is in a connected mode, the terminal device A may further send, to a network device, the auxiliary information that is sent by the terminal device B. The network device determines first configuration information of the terminal device A and indicates the first configuration information to the terminal device A.

The QoS requirement of the service in this application may include but is not limited to one or more of the following: a 5G quality of service identifier (5G QoS identifier, 5QI), a 5G quality of service identifier (PC5 QoS identifier, PQI) of a PC5 interface, a logical channel priority for service, or another QoS parameter reflecting a priority, reliability, a delay, a data rate, or the like of service data.

By way of example and not for limitation, the auxiliary information may include but is not limited to at least one of the following: resource configuration information, load information, speed information, QoS requirement information of the service, a traffic pattern (traffic pattern), and first configuration information recommended by the terminal device B. For example, a service mode may include information such as a service period, an offset relative to a time reference point at an arrival moment of the service data, and a size of a maximum transmission block of the service data.

The terminal device B may detect or determine the auxiliary information, and then send the auxiliary information to the terminal device A. Alternatively, the network device indicates the auxiliary information to the terminal device B, and then the terminal device B forwards the auxiliary information to the terminal device A. Alternatively, the auxiliary information may include a portion of information that is detected or determined by the terminal device and/or a portion of information that is indicated by the network device. This is not limited in this application.

In another implementation, the terminal device A may determine the first configuration information from one or more pieces of configuration information A. The one or more pieces of configuration information A may be preconfigured on a system and/or configured by the network device for the terminal device.

By way of example and not for limitation, the network device configures, by using an RRC message and/or a system message, the one or more pieces of configuration information A for the terminal device A.

Optionally, the terminal device A may simultaneously have a plurality of pieces of configuration information A that are configured in at least two of the following manners: preconfigured on the system, configured by the network device by using the RRC message, or configured by using the system message. The terminal device A may determine, based on a priority, the first configuration information from a specific piece of configuration information A. For example, a priority of configuration information A that is configured by the network device is higher than that of configuration information A that is preconfigured on the system, and a priority of configuration information A that is configured by the network device by using a dedicated RRC message of the terminal device is higher than that of configuration information A that is configured by using the system message. However, this application is not limited thereto.

The terminal device A may determine the first configuration information based on but is not limited to one or more of the following manners:

Manner 1: The terminal device A may determine, based on the auxiliary information that is sent by the terminal device B to the terminal device A, the first configuration information from the one or more pieces of configuration information A.

Manner 2: The terminal device A may determine, based on a service requirement, the first configuration information from the one or more pieces of configuration information A.

Optionally, the terminal device A may specifically determine, based on the QoS requirement of the service and/or a first mapping relationship, the first configuration information from the one or more pieces of configuration information A.

For example, the first mapping relationship may be that value ranges of QoS requirements of a plurality of services correspond to a plurality of pieces of configuration information. The first mapping relationship may be that shown in Table 1. The terminal device A may determine the first configuration information based on a QoS requirement of a service of the terminal device A. For example, if the QoS requirement of the service of the terminal device A falls within a QoS requirement range 3 in Table 1, the terminal device A determines that the first configuration information is configuration information 3 corresponding to the QoS requirement range 3. Optionally, when the terminal device A includes a plurality of services corresponding to different value ranges, the terminal device A may determine the first configuration information based on priorities of the services. The priority of the service may be specified in a protocol or preset on a system. Alternatively, the priorities of the services may be sequentially arranged in ascending order or descending order based on the values of QoS requirements. This is not limited in this application. For example, the terminal device A includes two services. For example, a QoS requirement of a service 1 falls within a range 1, and a QoS requirement of another service 2 falls within a range 3. Because a priority of the service 2 is higher than that of the service 1, the terminal device A determines that the first configuration information is configuration information 3 corresponding to the service 2.

**Table 1**

| QoS requirement | Configuration information A |
|---|---|
| QoS requirement range 1 | Configuration information 1 |
| QoS Requirement range 2 | Configuration information 2 |
| QoS requirement range 3 | Configuration information 3 |

Optionally, the terminal device A may specifically determine, based on a service type and/or a second mapping relationship, the first configuration information from the one or more pieces of configuration information A. For example, the service type may be the service mode or the like.

For example, the first mapping relationship may be that a plurality of service types correspond to the plurality of pieces of configuration information. As shown in Table 2, the terminal device A may determine, based on the service type, the first configuration information from the one or more pieces of configuration information A.

**Table 2**

| Service type | Configuration information A |
|---|---|
| Service type 1 | Configuration information 1 |
| Service type 2 | Configuration information 2 |
| Service type 3 | Configuration information 3 |
| Service type 1 and service type 2 | Configuration information 4 |
| Service type 2 and service type 3 | Configuration information 5 |
| Service type 1 and service type 3 | Configuration information 6 |
| Service type 1, service type 2, and service type 3 | Configuration information 7 |

Manner 3: The terminal device A may receive indication information A of the network device. The indication information A indicates the first configuration information, and the first configuration information may be one of the one or more pieces of configuration information A. The terminal device A may determine, based on the indication information A, the first configuration information of the first DRX from the one or more pieces of configuration information A. For example, the indication information A may include an identifier of one piece of configuration information A. The terminal device A determines, based on the identifier in the indication information A, that configuration information A corresponding to the identifier in the one or more pieces of configuration information A is the first configuration information. However, this application is not limited thereto.

In an implementation, the first configuration information may include but is not limited to one or more of the following:

a first DRX cycle, used to indicate a length of the first DRX cycle;

a start offset of the first DRX, used to determine a start moment of the first DRX cycle;

duration of a first timer, where the first timer is used to control DRX activation duration in each first DRX cycle;

duration of a second timer, where the second timer is used to control the DRX activation duration after control information about scheduling newly transmitted data is received; and

a slot offset of the first DRX, used to indicate the slot offset from a start moment of the first DRX cycle to a moment of the first timer is started.

In this implementation, the first configuration information that is determined by the terminal device A includes basic configuration of the first DRX. In addition, the terminal device A may determine, by receiving second configuration information that is sent by the terminal device B in step S240, other configuration information of the first DRX. The terminal device A may perform a first DRX operation based on the first configuration information and/or the second configuration information, and monitor, in DRX activation time, the SCI and/or the data that are/is on the sidelink and that are/is sent by the terminal device B. The terminal device B may determine, based on the first configuration information and/or the second configuration information, DRX activation time of the first DRX of the terminal device A, and send the SCI and/or the data that are/is on the sidelink and that are/is sent to the terminal device B in the DRX activation time.

In another implementation, in addition to including one or more of the first DRX cycle, the start offset of the first DRX, the duration of the first timer, the duration of the second timer, and the slot offset of the first DRX, the first configuration information may further include but is not limited to one or more of the following:

duration of a third timer, where the third timer is used to control minimum duration of next data retransmission in a same (hybrid automatic repeat request, HARQ) process; and

duration of a fourth timer, where the fourth timer is used to control maximum duration for detecting and/or receiving retransmitted data.

In this implementation, the terminal device A may determine all configuration information of the first DRX, that is, the first configuration information, and notify the terminal device B in step S220. The terminal device A may perform the first DRX operation based on the first configuration information, and receive, within the DRX activation time, the SCI and/or the data that are/is on the sidelink and that are/is sent by the terminal device B. The terminal device B may determine, based on the first configuration information, the DRX activation time of the first DRX of the terminal device A, and send the SCI and/or the data on the sidelink to the terminal device B in the DRX activation time. In other words, in this implementation, step S230 and/or the step S240 may not be performed, and the terminal device A and/or the terminal device B determine/determines DRX activation time of the terminal device A based on the first configuration information.

S220: The terminal device A sends first configuration information to the terminal device B.

The terminal device B receives the first configuration information that is sent by the terminal device A. Optionally, the terminal device B stores the first configuration information in context information (UE context) of the terminal device A.

By way of example and not for limitation, the sidelink RRC message that is sent by the terminal device A to the terminal device B includes the first configuration information.

S230: The terminal device B determines second configuration information of the first DRX.

The second configuration information may include HARQ-related information in the first DRX operation. By way of example and not for limitation, the second configuration information may include information about the third timer and/or information about the fourth timer. For example, the information about the third timer indicates the minimum duration of the next data retransmission in the same HARQ process, and the information about the fourth timer indicates the maximum duration for detecting and/or receiving the retransmitted data.

The terminal device B may determine the second configuration information in one or more of the following manners:

Manner 1: The terminal device B may determine the second configuration information based on information related to the terminal device B. The related information may include but is not limited to one or more of a channel busy ratio (channel busy ratio, CBR), a speed, or a QoS requirement of a service.

Manner 2: The terminal device B may determine the second configuration information from one or more pieces of configuration information B. The one or more pieces of configuration information B may be preconfigured on the system and/or configured by the network device for the terminal device.

By way of example and not for limitation, the network device configures, by using the RRC message and/or the system message, the one or more pieces of configuration information B for the terminal device B.

Optionally, the terminal device B may simultaneously have a plurality of pieces of configuration information B that are configured in at least two of the following manners: preconfigured on the system, configured by the network device by using the RRC message, or configured by using the system message. The terminal device A may determine, based on a priority of the configuration information that is preconfigured on the system, configured by the network device by using the RRC message, or configured by using the system message, the second configuration information from the one or more pieces of information B that is preconfigured on the system, configured by the network device by using the RRC message, or configured by using the system message. For example, a priority of configuration information of the network device is higher than that of the configuration information that is preconfigured on the system, and a priority of configuration information that is configured by the network device by using the dedicated RRC message of the terminal device is higher than that of configuration information that is configured by using the system message. However, this application is not limited thereto.

Optionally, the terminal device B determines, based on the related information, the second configuration information from the one or more pieces of configuration information B (that is, an example of a fourth configuration information). For example, value ranges of a plurality of pieces of related information correspond to the pieces of configuration information B. The terminal device B determines, based on a specific value of the related information, a value range 1 of the specific value of the related information, and determines configuration information B corresponding to the value range 1 as the second configuration information.

Optionally, the terminal device B receives indication information B of the network device, where the indication information B indicates one of the one or more pieces of configuration information B, and the terminal device B determines the second configuration information based on the indication information B.

By way of example and not for limitation, the indication information B may be included in the RRC message that is sent by the network device or the system message.

For example, the terminal device B may obtain a sidelink resource in a mode 1, and the terminal device may determine, based on the indication information B of the network device, the second configuration information. The indication information B may include an identifier of one of the one or more pieces of configuration information A. The terminal device B determines, based on the identifier in the indication information B, that configuration information B corresponding to the identifier is the first configuration information. However, this application is not limited thereto.

S240: The terminal device B sends the second configuration information to the terminal device A.

The terminal device A receives the second configuration information that is sent by the terminal device B. Optionally, the terminal device A stores the second configuration information in context information of the terminal device B.

By way of example and not for limitation, the sidelink RRC message that is sent by the terminal device B to the terminal device A includes the second configuration information.

S250: The terminal device B sends indication information C to the network device. The indication information C indicates the first configuration information and/or the second configuration information of the first DRX of the terminal device A.

The network device receives the indication information C, and determines the configuration information of the first DRX of the terminal device A based on the indication information C.

In an implementation, the indication information C includes the first configuration information of the first DRX. In this implementation, the second configuration information may be determined by the network device and notified to the terminal device B based on the indication information B. Therefore, the network device has obtained the second configuration information, and may determine the activation time of the first DRX of the terminal device A after obtaining the first configuration information based on the indication information C. The network device may allocate a resource in the activation time of the first DRX to the terminal device B, so that the terminal device B can send the sidelink control information (sidelink control information, SCI) and/or the data to the terminal device A in the activation time of the first DRX. However, this application is not limited thereto.

In another implementation, the indication information C includes the first configuration information and/or the second configuration information of the first DRX. The network device determines activation time of the terminal device A based on the indication information C, so that the network device may allocate the resource in the activation time of the first DRX to the terminal device B, and the terminal device B may send the SCI and/or the data to the terminal device A in the activation time of the first DRX. However, this application is not limited thereto.

It should be noted that the step S250 is an optional step. For example, when in the mode 1, the terminal device B may send the indication information C to the network device, so that the network device may determine the DRX activation time of the terminal device A, and allocate the resource in the DRX activation time of the terminal device A to the terminal device B. Therefore, the terminal device B can send, within the DRX activation time of the terminal device A, the data on the sidelink to the terminal device A. However, this application is not limited thereto. When the terminal device B obtains a sidelink resource in a mode 2, the terminal device B may not send the indication information C to the network device, that is, the step S250 may not be performed. However, this application is not limited thereto. In addition, the terminal device B may alternatively perform the step S250 after the step S220 and before the step S230 or S240.

S260: The terminal device A starts to perform the first DRX operation.

S270: The terminal device B sends the SCI and/or the data to the terminal device A in the activation time of the first DRX.

The terminal device A may start to perform the first DRX operation in one or more of the following cases:

Case 1: The terminal device A starts to perform the first DRX operation after sending the first configuration information.

Case 2: The terminal device A starts to perform the first DRX operation after receiving first feedback information. The first feedback information is feedback information that the terminal device B successfully receives the first configuration information. Correspondingly, after sending the first feedback information, the terminal device B determines that the terminal device A starts to perform the first DRX operation. Optionally, the second configuration information that is sent by the terminal device B may be used as the first feedback information. In other words, after receiving the second configuration information, the terminal device A considers that the terminal device B successfully receives the first configuration information, and starts to perform the first DRX operation. Correspondingly, after sending the second configuration information, the terminal device B determines that the terminal device A starts to perform the first DRX operation.

Case 3: The terminal device A starts to perform the first DRX operation after sending indication information D (that is, an example of first indication information). The indication information D indicates the terminal device A to start performing the first DRX operation.

Case 4: The terminal device A starts to perform the first DRX operation after sending second feedback information to the terminal device B. The second feedback information is feedback information that the terminal device A successfully receives the second configuration information. Correspondingly, after receiving the second feedback information, the terminal device B determines that the terminal device A starts to perform the first DRX operation.

Case 5: The terminal device A starts to perform the first DRX operation after receiving instruction information E that is sent by the terminal device B. The instruction information E indicates the terminal device A to start performing the first DRX operation.

After determining that the terminal device A starts to perform the first DRX operation, the terminal device B sends the SCI and/or the data to the terminal device A in the activation time of the first DRX of the terminal device A.

The terminal device A starts, based on the first DRX cycle, the first timer after a start moment of each first DRX cycle or the slot offset of the start moment, and receives, in a running period of the first timer, the sidelink control information (sidelink control information, SCI). In other words, the terminal device A is in DRX activation time in the running period of the first timer. If the first configuration information includes the start offset of the first DRX, the terminal device A may determine a starting location of the first timer based on the start offset.

It should be noted that starting the timer in this application may be understood as starting when the timer is started. Alternatively, starting the timer may be understood as restarting the timer when one timer is running.

For example, the terminal device A may determine, based on a formula below, a subframe number that meets a condition:

$$[(DFN \times 10) + subframe\ number]\ mod\ (DRX\ Cycle) = (StartOffset)\ modulo\ (DRX\ Cycle)$$

The first timer may be started after a SlotOffset is delayed at a start location of a subframe corresponding to the subframe number, where mod represents a modulo value, DFN represents a direct frame number (direct frame number, DFN), subframe number represents the subframe number, DRX Cycle represents the first DRX cycle, StartOffset represents a start location offset of the first DRX, and SlotOffset represents the slot offset of the first DRX. For example, SlotOffset may be the number of offset slots. However, this application is not limited thereto.

In the activation time of the first DRX, the terminal device A may perform one or more of the following behavior: monitor the SCI; parse a physical sidelink shared channel (physical sidelink shared channel, PSSCH) indicated by the monitored SCI; or monitor a physical sidelink feedback channel (physical sidelink feedback channel, PSFCH).

Optionally, in the activation time of the first DRX, a format of the SCI that needs to be monitored by the terminal device A may include but is not limited to a format of 0-1 (SCI format 0-1) and/or a format of of 0-2 (SCI format 0-2). For example, the SCI in the format of 0-1 may indicate a parameter related to resource allocation, and the SCI in the format of 0-2 may include one or more of the following information: a source address, a destination address, a retransmission or new transmission indicator, and a HARQ process indicator.

When the terminal device A receives, within the activation time of the first DRX, SCI that is sent by the terminal device B, and the SCI indicates that the transmitted data is data of the terminal device.

Alternatively, if the SCI indicates the terminal device B to send the newly transmitted data to the terminal device A, the second timer is started/restarted.

If the SCI indicates that the terminal device B reserves a subsequent retransmission resource for the terminal device A, that is, the terminal device B has an opportunity to retransmit, on the subsequently reserved retransmission resource, data that is transmitted this time based on indication of the SCI, the terminal device A may use but is not limited to the following implementations.

Implementation A: The terminal device A starts the third timer. It should be noted the activation time of the first DRX of the terminal device A may not be affected when the third timer runs, that is, whether the terminal device is in the activation time of the first DRX is irrelevant to whether the third timer runs. In other words, if the terminal device A is in the activation time of the first DRX, regardless of whether the third timer is running, the terminal device A is still in the activation time of the first DRX. If the terminal device A is in inactivation time of the first DRX, regardless of whether the third timer is running, the terminal device A is still in the inactivation time of the first DRX. Optionally, the terminal device A may start the third timer after a next time unit or M time units carrying a data resource. Alternatively, the terminal device A may start the third timer after sending feedback information (ACK or NACK) for this transmission giving feedback on the M time units of NACK. Optionally, if the SCI indicates that the terminal device B reserves at least one transmission resource for this transmission of the terminal device A, the terminal device A may start the third timer after a next time unit or M time units at which the transmission is performed on only the reserved first transmission resource or after M time units at which this transmission is fed back/NACK is fed back. By way of example and not for limitation, the time unit may be one of a symbol, a slot, or a subframe, and M is an integer that is greater than or equal to 1. For example, a value of M is predefined in the protocol, preconfigured on the system, or configured by the network device. Optionally, if the fourth timer of the HARQ process is running, the fourth timer is stopped. When the third timer expires, and the terminal device A gives feedback that the feedback information is not successfully received or fails to decode the data, the terminal device A starts a fourth timer corresponding to the HARQ process. However, this application is not limited thereto.

In this implementation, duration of the third timer may be duration of the third timer that is indicated in the first configuration information or the second configuration information, or may be duration T1 that is determined based on a gap (gap) between this transmission resource and a next transmission resource that is indicated in the SCI, for example, T1 may be equal to the gap (gap), or gap $\pm$ K time units. Duration of the fourth timer may be duration of the fourth timer that is indicated in the first configuration information or the second configuration information, may be duration T2 that is determined based on fixed L time units, or may be duration T2 that is determined based on duration (duration) occupied by retransmission resource. For example, T2 may be equal to duration, or duration $\pm$ L time units. By way of example and not for limitation, the time unit may be one of the symbol, the slot, or the subframe, and K and L are integers that are greater than or equal to 1. For example, values of K and L are predefined in the protocol, preconfigured on the system, or configured by the network device.

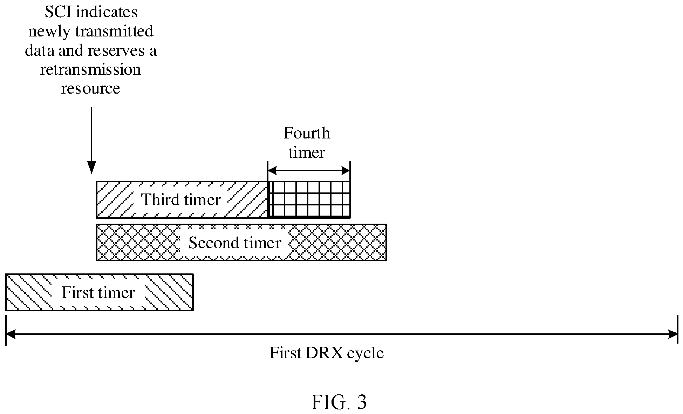

For example, as shown in FIG. 3, in one first DRX cycle, if the terminal device A receives, in the running period of the first timer, the SCI for scheduling the newly transmitted data, the terminal device A starts the second timer, and the terminal device A monitors the SCI in a running period of the second timer. In addition, if the SCI indicates that the retransmission resource is reserved for the terminal device A, the terminal device A starts a third timer corresponding to the HARQ process of the newly transmitted data, and the activation time of the first DRX of the terminal device A may not be affected in a running period of the third timer. When the third timer expires, and the terminal device A gives the feedback that the feedback information is not successfully received or fails to decode the data, the terminal device A starts the fourth timer to receive the retransmitted data.

Implementation B: The terminal device A determines, based on a HARQ feedback result for the data or whether the data is successfully decoded, whether to receive the SCI and/or the data on the subsequent retransmission resource that is indicated by the SCI.

For example, if the terminal device A gives the feedback that the feedback information is not successfully received or fails to decode the data, the terminal device A receives the SCI and/or the data on the retransmission resource that is indicated by the SCI. If the terminal device A gives feedback that the feedback information is successfully received or successfully decodes the data, the terminal device A does not receive the SCI and/or the data on the retransmission resource that is indicated by the SCI. Optionally, when the terminal device A determines not to receive the SCI and/or the data on the retransmission resource that is indicated by the SCI, if the third timer and/or the fourth timer corresponding to a current HARQ process are/is running, the terminal device A may shut down the third timer and/or the fourth timer corresponding to the HARQ process. In an optional implementation, the terminal device A receives the SCI and/or the data on the subsequent retransmission resource that is indicated by the SCI.

If the SCI indicates that the terminal device B does not reserve the subsequent retransmission resource for the terminal device A, the terminal device A may use but is not limited to the following implementations:

Implementation a is the same as the foregoing implementation A. For details, refer to the foregoing description. For brevity, details are not described herein again.

Implementation b: The terminal device A determines, based on a HARQ enabling status that is indicated by the terminal device B, whether to start the third timer. If the HARQ that is indicated by the terminal device B is in a disabled (disable) state, to be specific, the terminal device A does not need to send HARQ feedback, the terminal device A does not start the third timer. If the HARQ that is indicated by the terminal device B is in an enabled (enable) state, the terminal device A starts the third timer. Optionally, the terminal device A may start the third timer after sending the HARQ feedback information (ACK or NACK) or after a next time unit or M time units at which NACK is fed back. Alternatively, the terminal device A may start the third timer after a next time unit or M time units at which the feedback information (NACK) is not successfully received. The time unit may be one of a symbol, a slot, or a subframe, and M is an integer that is greater than or equal to 1. For example, a value of M is predefined in a protocol or configured by the network.

The terminal device B may maintain the timers in a manner the same as that of the terminal device A, and may choose to send the SCI and/or the data to the terminal device in the activation time of the first DRX. Alternatively, the terminal device B maintains, based on only the first configuration information, the first timer and/or the second timer. For example, the terminal device B obtains the sidelink resource in the mode 1, the network device maintains the third timer and/or the fourth timer, the network device selects, based on the activation time of the first DRX of the terminal device A, the sidelink resource for the terminal device B and notifies the terminal device B, and the terminal device B sends, based on an indication of the network device, the data to the terminal device A; therefore, the terminal device B may not maintain the third timer and the fourth timer.

The terminal device A is in the DRX activation time in one or more of the following cases:

Case A: in a running period of the first timer.
Case B: in a running period of the second timer.
Case C: A fourth timer related to at least one HARQ process is running.
Case D: at a time domain position of the reserved retransmission resource that is indicated by the SCI.
Case E: a moment at which the terminal device A needs to receive the HARQ feedback on the sidelink.
Case F: in a waiting period of receiving a channel state information (channel state information, CSI) report by the terminal device A. Optionally, the terminal device A starts or restarts a fifth timer after sending a CSI request. After receiving the CSI report, the terminal device A stops, in DRX activation time in a running period of the fifth timer, the fifth timer.

Optionally, after sending the CSI request, the terminal device A is in the activation time of the first DRX in a first gap.

By way of example and not for limitation, a time length of the fifth timer and/or the first gap may be obtained in one or more of the following manners:
predefined in a protocol, preconfigured on a system, configured by the network device, or indicated by the terminal device that sends the CSI report.

For example, the network device configures the time length of the fifth timer and/or the first gap by using the RRC dedicated message and the system message, and the terminal device that sends the CSI report indicates the time length of the fifth timer and/or the first gap by using the sidelink RRC message.

Case G: When the terminal device A receives a unicast establishment request that is sent by another terminal device other than the terminal device B, or when the terminal device A sends a unicast establishment request to another terminal device other than the terminal device B, and before unicast establishment is completed, or before exchanging DRX configuration is completed, or before a DRX operation is performed, optionally the terminal device A starts or restarts the sixth timer after receiving or sending the unicast establishment request. The terminal device A is in DRX activation time in a running period of the sixth timer, and stops the sixth timer after unicast establishment is completed or exchanging DRX configuration is completed/starting to perform a DRX operation.

Optionally, after receiving the unicast establishment request, the terminal device A is in the activation time of the first DRX in a second gap.

Case G may be expanded to another process. For example, if the terminal device A sends a request message such as a configuration request to one terminal device, and before receiving a corresponding response message sent by the one terminal device, the terminal device A is in the DRX activation time. Optionally, when the terminal device A starts or restarts the sixth timer after sending the request message to the one terminal device. In the running period of the sixth timer, the terminal device A is in the DRX activation time, and stops the sixth timer after receiving a response message that is sent by a peer device. Optionally, the terminal device A is in the activation time of the first DRX in the second gap after sending the request message to the one terminal device.

By way of example and not for limitation, a time length of the sixth timer and/or the second gap may be obtained in one or more of the following manners:
predefined in a protocol, preconfigured on a system, or configured by the network device. For example, the network device configures the time length of the sixth timer and/or the second gap by using the RRC dedicated message and the system message.

According to this solution in this application, the DRX activation time may be specified, so that a receiving device performing a DRX operation and the sending device may reach a consensus on the DRX activation time, to ensure data transmission reliability.

In this application, the terminal device A may reconfigure the information about the first DRX for the terminal device B. By way of example and not for limitation, the terminal device A may send the reconfiguration information about the first DRX to the terminal device B by using the RRC message of the sidelink.

Optionally, the terminal device A may reconfigure the information about the first DRX when one or more of the following conditions are met:

Condition 1: The terminal device A initiates a service with a new QoS requirement, and the current configuration information of the first DRX cannot meet the new QoS requirement. For example, if the current configuration information of the first DRX cannot meet a latency requirement of the new service, the terminal device A reconfigures the first DRX, and notifies the terminal device B of the reconfiguration information of the first DRX. However, this application is not limited thereto.

Condition 2: The terminal device A receives the indication information A that is sent by the network device, and the indication information A indicates configuration information A that is different from the first configuration information. For example, the indication information A indicates an identifier of configuration information A whose identifier is different from that of the first configuration information. After receiving the indication information A, the terminal device A reconfigures the information about the first DRX, and notifies the terminal device B of the reconfiguration information of the first DRX. However, this application is not limited thereto.

In this application, the terminal device B may alternatively reconfigure the information about the first DRX for the terminal device A. By way of example and not for limitation, the terminal device B may send the reconfiguration information about the first DRX to the terminal device A by using the RRC message of the sidelink.

Optionally, the terminal device B may reconfigure the information about the first DRX when one or more of the following conditions are met.

Condition 1: A sidelink resource allocation mode of the terminal device B changes. For example, if the sidelink resource allocation mode is switched from the mode 1 to the mode 2 or from the mode 2 to the mode 1, the terminal device B may update the second configuration information of the first DRX, and send the updated configuration information to the terminal device A.

Condition 2: A connection status between the terminal device B and the network changes. For example, when the terminal device B changes from an RRC connected mode to an RRC idle mode or an RRC inactive (Inactive) state, or changes from an RRC idle mode or an RRC inactive state to an RRC connected mode, and alternatively, the terminal device B moves from a coverage area of the network device to outside a coverage area of the network device, or moves from inside of a coverage area of the network device to outside of the coverage area of the network device, the terminal device B may update the second configuration information of the first DRX, and send the updated configuration information to the terminal device A.

For example, when the terminal device B is located outside the coverage area of the network device, the terminal device B obtains the second configuration information of the first DRX through system preconfiguration. When the terminal device B is located within the coverage area of the network device, the terminal device B obtains the second configuration information of the first DRX by using the RRC message and/or the system message of the network device. When the terminal device B moves from the inside of the coverage area of the network device to the outside of the coverage area of the network device, the terminal device B obtains new second configuration information of the first DRX, and sends the new second configuration information to the terminal device A.

Condition 3: The terminal device B determines that information related to the second configuration information of the first DRX changes, for example, one or more of the channel busy ratio (channel busy ratio, CBR), a speed, or the QoS requirement of the service change, the terminal device B may update the second configuration information of the first DRX, and send the updated configuration information to the terminal device A.

According to this solution in this application, the receiving device performing a DRX operation may determine, based on a status of a sidelink connection that is established by the receiving device performing a DRX operation, DRX operation configuration information used for the sidelink. This can avoid the following case: If the network device configures a sidelink DRX operation for the receiving device, because the network device cannot obtain the status of the sidelink connection of the receiving device, configuration may be improper, and this may not save energy or may reduce communication reliability. Therefore, this solution in this application can reduce power consumption of the terminal device, and improve the communication reliability. Optionally, this solution in this application provides that a sending device for performing a DRX operation used for the sidelink notifies the receiving device of HARQ-related DRX operation configuration information used for the sidelink, so that proper timer duration can be determined based on a workload, to save energy.

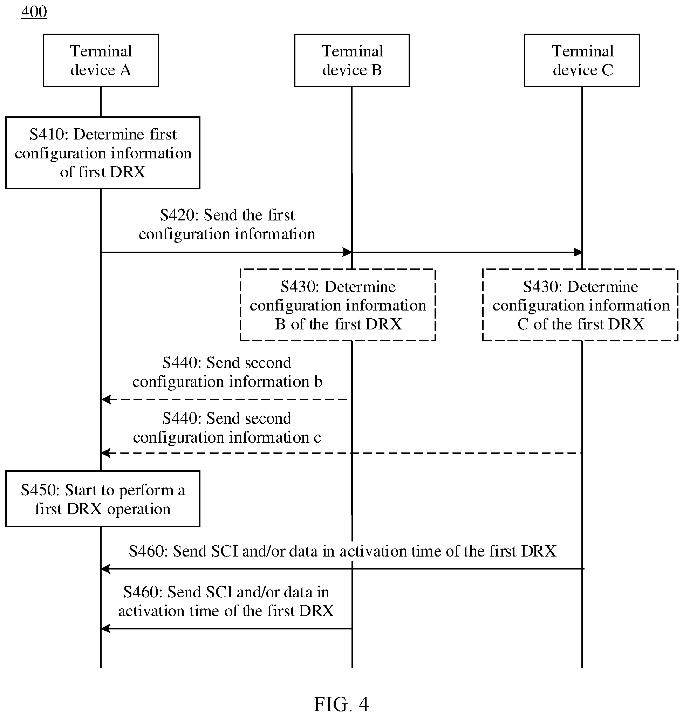

FIG. 4 is a schematic flowchart of another example of a communication method of a sidelink according to an embodiment of this application.

In this application, the terminal device A may establish a sidelink to a plurality of terminal devices. FIG. 4 uses the terminal device A and two terminal devices, to be specific, the terminal device B and a terminal device C (another example of the second terminal device) as an example for description. However, this application is not limited thereto. It should be noted that, for same or similar parts in FIG. 4 and FIG. 2, refer to the foregoing description of FIG. 2. For brevity, details are not described herein again.

S410: The terminal device A determines first configuration information of first DRX.

The first DRX is used by the terminal device A to receive SCI and/or data on a plurality of sidelinks. In other words, when the terminal device A establishes the sidelink to the plurality of terminal devices, the terminal device maintains a DRX configuration, to be specific, the configuration information of the first DRX, and determines DRX activation time based on the configuration information of the first DRX, to receive the SCI and/or the data on the plurality of sidelinks.

In an implementation, the terminal device A may determine, based on a quality of service (quality of service, QoS) requirement of a service on the plurality of sidelinks, the first configuration information of the first DRX. Alternatively, a sending device (that is, the terminal device B and/or the terminal device C) of the plurality of sidelinks separately send auxiliary information, for example, auxiliary information B and auxiliary information C, to the terminal device A. The terminal device A may determine one piece of first configuration information based on the auxiliary information B and/or the auxiliary information C.

In another implementation, the terminal device A may determine the first configuration information from one or more pieces of configuration information A.

The terminal device A may determine the first configuration information in one or more of the foregoing manner 1 to manner 3 of determining the first configuration information. For example, in the manner 1 and the manner 3, the terminal device A may determine the one piece of first configuration information by comprehensively considering auxiliary information and a service requirement of the terminal device B and/or the terminal device C. Alternatively, the terminal device A may determine the one piece of first configuration information based on auxiliary information with a higher priority in the auxiliary information of the terminal device B and the auxiliary information of the terminal device C. Alternatively, the terminal device A may determine the one piece of first configuration information based on a service with a higher priority in services on the plurality of sidelinks. However, this application is not limited thereto.

In an implementation, the first configuration information includes one or more of a first DRX cycle, a start offset of the first DRX, duration of a first timer, duration of a second timer, and a slot offset of the first DRX. The other configuration information of the first DRX may be sent to the terminal device A by using the terminal device B and/or the terminal device C. To be specific, in step S430, the terminal device B and/or the terminal device C separately determine/determines the second configuration information, that is, the second configuration information B and the second configuration information C, and then separately send/sends the second configuration information to the terminal device A in step S440.

S420: The terminal device A sends the first configuration information to the terminal device B and/or the terminal device C.

The terminal device B receives the first configuration information, and stores the first configuration information in context information of the terminal device A. The terminal device C receives the first configuration information, and stores the first configuration information in the context information of the terminal device A.

In an implementation, the terminal device A may broadcast or multicast the first configuration information.

The terminal device B and/or the terminal device C determine/determines, based on an identifier of the terminal device A, that the broadcasted or multicasted first configuration information is sent by the terminal device A.

In another implementation, the terminal device A separately unicasts the first configuration information to the terminal device B and/or the terminal device C. In this implementation, in terms of time, time at which the terminal device A sends the first configuration information to the terminal device B may be earlier or later than time at which the terminal device A sends the first configuration information to the terminal device C. Alternatively, the terminal device A sends the first configuration information to the terminal device B and the terminal device C at the same time. A sequence in which the terminal device A sends the first configuration information to the terminal devices is not limited in this application. For example, the terminal device A may send the first configuration information to one terminal device after the terminal device establishes a unicast connection to the one terminal device. However, this application is not limited thereto.

S430: The terminal device B determines second configuration information b of the first DRX, and the terminal device C determines second configuration information c of the first DRX.

For a manner of determining the second configuration information b by the terminal device B and/or determining the second configuration information c by the terminal device C, refer to the description that the terminal device B determines the second configuration information in FIG. 2. For brevity, details are not described herein again.

The second configuration information B includes information about a third timer b and/or information about a fourth timer b. The second configuration information c includes the information about the third timer b and/or the information about the fourth timer b.

S440: The terminal device B sends the second configuration information B to the terminal device A, and the terminal device C sends the second configuration information C to the terminal device A.

In this implementation, the terminal device A maintains a piece of configuration information for receiving the SCI and/or the data on the sidelink, that is, the configuration information of first DRX, including the first configuration information that is determined by the terminal device A, the second configuration information b that is determined by the terminal device B, and the second configuration information c that is determined by the terminal device C.

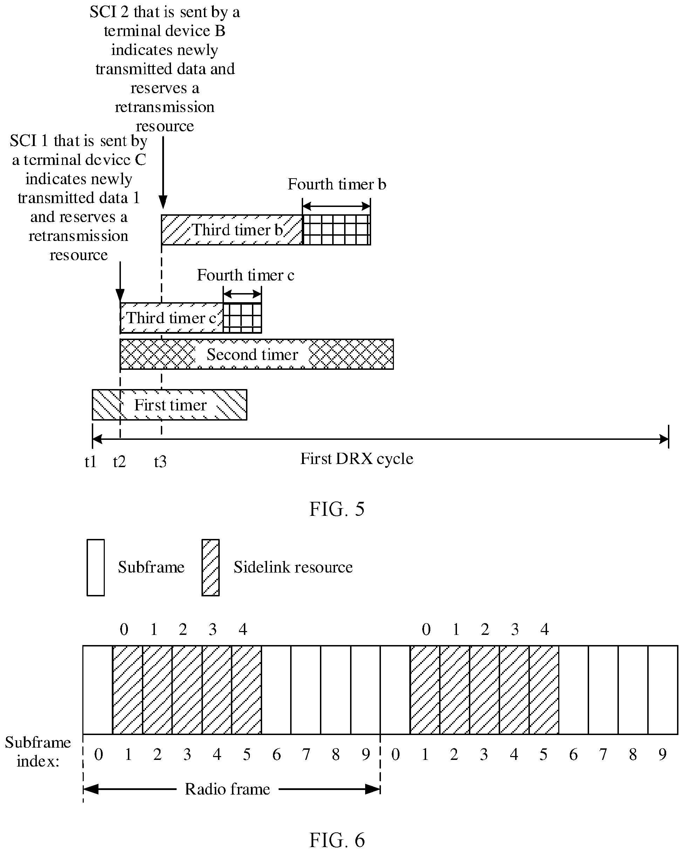

For example, as shown in FIG. 5, the terminal device A starts, based on the first DRX cycle and/or the start position offset in the first configuration information, a moment t1 of the first timer. In a running period of the first timer, the terminal device A is in the DRX activation time, and monitors SCI and/or data that is sent by the terminal device B and the terminal device C. If the terminal device A detects, at a moment t2, the SCI sent by the terminal device C. The SCI 1 indicates that new data 1 is scheduled, the terminal device A starts the second timer. The SCI 1 further indicates that the terminal device C reserves a retransmission resource for the terminal device A, and the terminal device A starts, based on the second configuration information c of the first DRX, a third timer c of a HARQ process 1 corresponding to newly transmitted data 1. In a running period of the third timer c of the HARQ process 1, the terminal device A starts a fourth timer c of the HARQ process 1 is started after the third timer c expires. In the running period of the fourth timer c of the HARQ process 1, the terminal device A receives retransmitted data of the HARQ process 1. Similarly, if the terminal device A receives, at the moment t3, SCI 2 that is sent by the terminal device B, the terminal device A starts a third timer b corresponding to a HARQ process 2. After the third timer b of the HARQ process 2 expires, the terminal device A starts a fourth timer b corresponding to the HARQ process 2.

It should be noted that the terminal device B and the terminal device C respectively perform the steps S430 and S440. Performing the steps S430 and S440 by the terminal device B and performing the steps S430 and S440 by the terminal device C are not subject to a specific sequence in this application. For example, the terminal device C performs the steps S430 and then performs the step S440, time at which the terminal device C performs the step S440 is earlier than time at which the terminal device B performs the step S430 or the step S440. This is not limited in this application.

In another implementation, in addition to including one or more of the first DRX cycle, the start offset of the first DRX, the duration of the first timer, the duration of the second timer, and the slot offset of the first DRX, the first configuration information may further include but is not limited to duration of the third timer and/or duration of the fourth timer.

In this implementation, the terminal device A determines all pieces of configuration information for performing a first DRX operation by the terminal device A, that is, the first configuration information. The terminal device A performs the first DRX operation based on the first configuration information, monitors, in the activation time of the first DRX, the SCI and/or the data on the sidelink that are/is sent by the terminal device B and the terminal device C. The terminal device B and the terminal device C determine the activation time of the first DRX of the terminal device A based on first configuration information, and send the SCI and/or the data on the sidelink to the terminal device A in the DRX activation time. In other words, in this implementation, the step S430 and/or the step S440 may not be performed, and the terminal device A, the terminal device B, and the terminal device C determine the DRX activation time of the terminal device A based on the first configuration information.

Optionally, the terminal device B and/or the terminal device C may further separately send indication information C, that is, indication information C1 and indication information C2, to the network device.

The indication information C1 that is sent by the terminal device B to the network device may include the first configuration information and/or the second configuration information b. The indication information C2 that is sent by the terminal device C to the network device may include the first configuration information and/or the second configuration information c. For a specific implementation, refer to the manner in which the terminal device B sends the indication information C to the network device in FIG. 2. For brevity, details are not described herein again.

For example, the terminal device B and the terminal device C may be connected to a same network device, or may be connected to different network devices. Optionally, when the terminal device B and the terminal device C are connected to the same network device, the network device may specify one of the terminal device B and the terminal device C to send the first configuration information to the network device. However, this application is not limited thereto.

S450: The terminal device A starts to perform the first DRX operation.

In a specific implementation, for a circumstance under which the terminal device A starts to perform the first DRX operation, refer to the description of the step S260 in FIG. 2. For brevity, details are not described herein again.

S460: The terminal device B sends the SCI and/or the data to the terminal device A in the activation time of the first DRX, and the terminal device B sends the SCI and/or the data to the terminal device A in the activation time of the first DRX.

After the terminal device A starts to perform the first DRX operation, the terminal device B and the terminal device C may determine, based on the first configuration information and/or the second configuration information, the activation time of the first DRX. When the terminal device B or the terminal device C needs to send the SCI and/or the data to the terminal device A, the terminal device B or the terminal device C sends the SCI and/or the data to the terminal device A in the activation time of the first DRX. For details about how to determine that the terminal device A is in the activation time of the first DRX, refer to the description in FIG. 2. For brevity, details are not described herein again.

According to this solution in this application, a receiving device performing a DRX operation maintains, for a plurality of sending devices based on a status of a sidelink connection established by the receiving device, common DRX operation configuration information used for a sidelink. This can avoid the following case: If the sending devices configure a sidelink DRX operation for the receiving device, information configured by the plurality of sending devices is inconsistent. As a result, the receiving device receives a signal in DRX operation activation time configured by each sending device, and energy cannot be saved. This solution in this application can effectively reduce power consumption of the terminal device. Optionally, this solution in this application provides that a sending device for performing a DRX operation used for the sidelink notifies the receiving device of HARQ-related DRX operation configuration information used for the sidelink, so that proper timer duration can be determined based on a workload, to save energy.

In this application, a unicast connection on the sidelink may be identified by using source layer-2 identifiers (source Layer-2 ID) of two terminal devices. However, when the sending device sends unicast data on the sidelink, for example, sending a media access control protocol data unit (media access control protocol data unit, MAC PDU), the identifiers that are carried in the SCI are the source layer-1 identifier (source Layer-1 ID) of the sending device, and are used to identify the sending device. In other words, after receiving the SCI, the receiving device may determine, based on the source layer-1 identifier, a terminal device that sends the SCI. Based on regulations of the existing NR release 16 (NR release 16), a length of the source layer-2 identifier of the terminal device is 24 bits, and the source layer-1 identifier that is sent by the terminal device in the SCI is the lowest 8 bits of the source layer-2 identifier. A destination layer-1 identifier (destination Layer-1 ID) that is carried in the SCI is the lowest 16 bits of a destination layer-2 identifier (destination Layer-2 ID). In other words, after receiving the SCI, the receiving device may determine, based on whether the destination layer-1 identifier that is carried in the SCI is the lowest 16 bits of the source layer-2 identifier of the receiving device, whether sending the SCI to the receiving device.

Therefore, the foregoing manner may cause a problem of the layer-1 identifier (the source layer-1 identifier or the destination layer-1 identifier) conflicts. For example, the source layer-2 identifiers of the terminal device A, the terminal device B, and the terminal device C are respectively DEF, ABC, and PQC. For example, each letter in the identifier identifies an 8-bit value. In this case, in a SCI 3 corresponding to data that is sent by the terminal device B to the terminal device A, the source layer-1 identifier is C, and the destination layer-1 identifier is EF. In a SCI 4 corresponding to data that is sent by the terminal device C to the terminal device A, the source layer-1 identifier is C, and the destination layer-1 identifier is EF. Therefore, the terminal device A cannot distinguish, by using the source layer-1 identifier in the SCI, whether the SCI is sent by the terminal device B or the terminal device C. Similarly, if destination layer-1 identifiers are the same, data between two terminal devices may also be incorrectly received.

For the problem that the identifiers conflicts, this application provides a method for resolving identifier conflicts in sidelink communication.

In an implementation, when the terminal device A determines that the source layer-1 identifiers or the destination layer-1 identifiers of the terminal device B and the terminal device C are the same, the terminal device A sends indication information F (that is, an example of second indication information) to one of the terminal device B or the terminal device C. The indication information F is used to request the terminal device B or the terminal device C to update the identifier. Optionally, the indication information may indicate that the updated identifier may be one of the source layer-1 identifier, the destination layer-1 identifier, or the source layer-2 identifier. After receiving the indication information F, the terminal device B or the terminal device C updates the identifier, and sends the updated identifier to the terminal device A.

In another implementation, when the terminal device A determines that the source layer-1 identifiers or the destination layer-1 identifiers of the terminal device B and the terminal device C are the same, for example, the identifiers are a first identifier, the terminal device A may update an identifier that is used when communicating with the terminal device B or the terminal device C to a second identifier. The terminal device A sends indication information G (that is, an example of third indication information) to the one of the terminal device B or the terminal device C. The indication information G indicates the terminal device B or the terminal device C to update the identifier of the terminal device A to the second identifier. In other words, after determining that identifiers of two terminal devices conflict, the terminal device A updates the identifier used by the terminal device A when communicating with the one of the terminal devices (the terminal device B or the terminal device C), to be specific, updates the identifier to the second identifier, and notifies the one terminal device. Therefore, after receiving the SCI from the one terminal device, the terminal device A determines, based on that the destination identifier carried in the SCI is the second identifier, that the SCI is sent by the one terminal device to the terminal device A. When the terminal device A sends the SCI to the one terminal device, the source identifier that is carried in the SCI is the second identifier or the lowest 8 bits of the second identifier, so that after the one terminal device receives the SCI that is sent by the terminal device A, the one terminal device may determine, based on that a source identifier that is carried in the SCI is the second identifier or the lowest 8 bits of the second identifier, that the SCI is sent by the terminal device A to the one terminal device.

For example, when the terminal device A determines that both the source layer-1 identifiers of the terminal device B and the terminal device C are C (that is, the first identifier is C), the terminal device A determines to update the identifier used by the terminal device A when communicating with the terminal device B, for example, update the identifier to ED (that is, the second identifier is ED), and sends the indication information G to the terminal device B. The terminal device B receives the indication information G, and determines to update the identifier of the terminal device A to ED. When the terminal device B sends the SCI to the terminal device A, the destination identifier that is indicated by the SCI is ED. After receiving one piece of SCI, the terminal device B determines, based on that the source identifier in the SCI is ED or D, that the SCI is sent by the terminal device A. However, this application is not limited thereto. According to the foregoing solution, a problem that the terminal device cannot determine actual data of the sending device or the receiving device due to an identifier conflict may be resolved, and so that communication security and communication reliability may be improved.

In this application, the terminal device may determine, based on the destination identifier of the broadcast service or the multicast service, a time domain resource or a frequency domain resource for receiving data of the broadcast service or the multicast service.

By way of example and not for limitation, the terminal device may determine, based on the destination identifier of the broadcast service or the multicast service and/or third mapping relationship, the time domain resource or the frequency domain resource of the data of the broadcast service or the multicast service data.

By way of example and not for limitation, the destination identifier may be the destination layer-2 identifier of the broadcast service or the multicast service, that is, the destination Layer-2 ID. Optionally, the destination identifier may also be an identifier of the broadcast service or the multicast service at an application layer, the destination layer-1 identifier (for example, the lowest 16 bits of the destination layer-2 identifier), or the lowest N bits or upper N bits of the destination layer-2 identifier/destination layer-1 identifier, where N is an integer that is greater than or equal to 1, and this is not limited in a specific implementation.

Optionally, the third mapping relationship may include but is not limited to one or more of the following:

destination identifier mod N1 = (time domain resource number/K1) mod M1; and
destination identifier mod N2 = (frequency domain resource number/K2) mod M2, where
mod represents a modulo value, and one or more of N1, N2, K1, K2, M1, or M2 are parameter values that are predefined in a protocol, preconfigured on a system, or configured by the network device by using an RRC dedicated message or a system message. The time domain resource number may be written as resourceIndexTime, for example, an index of a time domain resource in a resource pool, where the resource pool is a resource used for the sidelink communication. The frequency domain resource number may be written as resourceIndexFreq, for example, an index of a frequency domain resource in the resource pool. For example, if the destination identifier is the destination layer-2 identifier of the broadcast service or the multicast service, the third mapping relationship may be written as:

$$(\text{destination Layer-2 ID}) \bmod N1 = (\text{resourceIndexTime} / K1) \bmod M1,$$

and/or,

$$(\text{destination Layer-2 ID}) \bmod N2 = (\text{resourceIndexFreq} / K2) \bmod M2.$$

Optionally, N1 = M1 or N2 = M2.

Optionally, K1 = 1, that is, (destination Layer-2 ID) mod N1 = resourceIndexTime mod M1.

Optionally, K2 = 1, that is, (destination Layer-2 ID) mod N2 = resourceIndexFreq mod M2.

For example, resourceIndexFreq is determined based on a sequence number of a frequency domain unit in which a radio transmission resource is located, for example, may be an index number of a resource block in a carrier or an index number of a subchannel (subchannel) in the resource pool.

resourceindextime may be determined in one or more of the following manners:

Manner 1: resourceIndexTime is determined based on a sequence number of a time unit in which a radio transmission resource is located. The sequence number of the time unit may include but is not limited to one of the following:

a radio frame index (radio frame index, such as a system frame number (system frame number, SFN) or a direct frame number (direct frame number, DFN)), a subframe index (subframe index, such as a subframe index in a radio frame), a slot index (slot index, for example, a slot index in a subframe), or a symbol index (symbol index, for example, a symbol index in a slot).

For example, in a sidelink resource in one subframe, resourceIndexTime of the sidelink resource may be:

$$\text{resourceIndexTime} = \text{radio frame index} \times 10 + \text{subframe index.}$$

The radio frame index is a number of a radio frame in which the sidelink resource is located, and the subframe index is an index of a subframe in which the sidelink resource is located.

For another example, in a sidelink resource in a slot, resource Index of the sidelink resource may be:

$$\text{resourceIndexTime} = (\text{radio frame index} * 10 + \text{subframe index}) \times \text{NumOfSlotPerSubframe} + \text{slot index.}$$

The slot index is an index of a slot in which the sidelink resource is located, and NumOfSlotPerSubframe is a quantity of slots in one subframe. A 15 kHz subcarrier is used as an example in which the one subframe includes 10 slots. However, this application is not limited thereto.

Optionally, if no sidelink resource is configured at a time domain position of the radio transmission resource that is determined in the manner 1, a terminal device ignores the location of the radio resource, to be specific, the terminal device cannot send or receive data of a broadcast service or a multicast service at a radio resource location.

Manner 2: resourceIndexTime is a number of a sidelink resource in a resource pool cycle.

For example, as shown in FIG. 6, a subframe 1 to a subframe 5 in each radio frame on one carrier are a sidelink resource pool, the resource pool cycle is 10 ms, that is, a length of one radio frame. In each resource pool cycle, subframes are numbered in sequence, that is, a first subframe (that is, the subframe 1 in the radio frame) in the resource pool is numbered 0 in the resource pool cycle, and a second subframe (that is, the subframe 2 in the radio frame) in the resource pool is numbered 1 in the resource pool cycle, the rest may be deduced by analogy. This example is merely used as an example for description. In a specific implementation, resources in the resource pool may alternatively be numbered by using a time granularity of a radio frame, a slot, or a symbol.

Manner 3: A sidelink resource is numbered in each numbering cycle, and resourceIndexTime is a number (or a sequence number) of a sidelink resource in one numbering cycle.

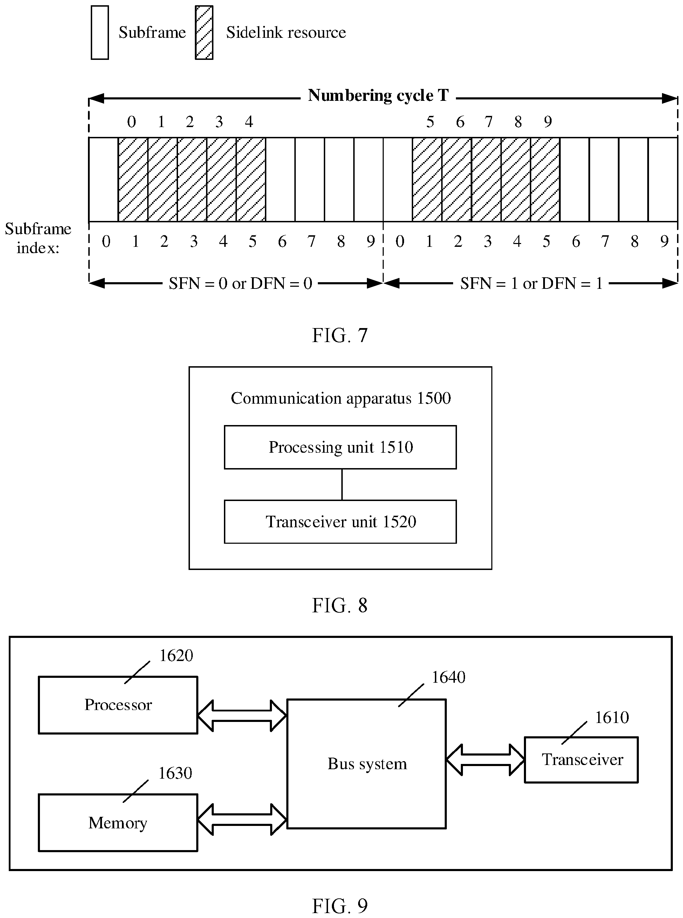

For example, as shown in FIG. 7, the numbering cycle is two radio frames. Starting from SFN = 0 or DFN = 0, a first numbering cycle T includes SFN = 0 and SFN = 1, or DFN = 0 and DFN = 1. A subframe 1 to a subframe 5 in each radio frame on a carrier are a sidelink resource pool. Therefore, the first numbering cycle T includes subframes of 10 sidelinks, and numbers in the numbering cycle are respectively 0 to 9.

Optionally, the numbering cycle T may also be defined as a multiple of a resource pool cycle. For example, a time length of the numbering cycle is equal to twice the length of the resource pool cycle.

Optionally, the numbering cycle T may start after a slot offset from SFN = 0 or DFN = 0.

In a specific implementation, resources in the resource pool may alternatively be numbered by using a time granularity of a radio frame, a slot, or a symbol.

The following uses an example in which the terminal device determines, based on the destination layer-2 identifier and/or third mapping relationship, the time domain resource or the frequency domain resource of the data of the broadcast service or the multicast service.

For example, the third mapping relationship is (destination Layer-2 ID) mod 2 = resourceIndexTime mod 2. resourceIndexTime is determined in the manner 3, and the numbering cycle may be the two radio frames. It may be determined, based on the third mapping relationship, that a broadcast service or a multicast service whose destination layer-2 ID is 1001 may be transmitted on a sidelink resource whose resource number is an odd number in the numbering cycle, and that a broadcast/multicast service whose destination layer-2 ID is 1002 may be transmitted on a sidelink resource whose resource number is an even number in the numbering cycle.

In an implementation, the terminal device may determine, based on the third mapping relationship, a new data transmission resource and/or a data retransmission resource of one broadcast service or one multicast service. To be specific, a sending device of the broadcast service or the multicast service sends newly transmitted data and/or retransmitted data on a sidelink resource that is determined by using the destination identifier, and a receiving device of the broadcast service or the multicast service monitors whether there is the newly transmitted data and/or the retransmitted data of the broadcast service or the multicast service on the sidelink resource that is determined by using the destination identifier.

In another implementation, the terminal device may determine, based on the third mapping relationship, a new transmission resource for the broadcast service or the multicast service. The sending device of the broadcast service or the multicast service sends the newly transmitted data on the sidelink resource that is determined by using the destination identifier, indicates time and frequency domain resource locations for retransmission in the SCI. After a receive device fails to parse the data, the receive device receives the retransmitted data at the retransmission resource location indicated in the SCI.

In another implementation, a timer A that is related to the broadcast service or the multicast service may be predefined in a protocol, preconfigured on a system, or configured by the network device by broadcast signaling or RRC dedicated signaling. For example, the timer A may be written as harqRTT-Timer and/or a timer B. For example, the timer A may be written as harqRetx-Timer. A specific name is not limited in this application. For example, the timer harqRTT-Timer indicates minimum duration of next data retransmission in a same HARQ process, and the harqRetx-Timer indicates maximum duration for detecting and/or receiving the retransmitted data. Optionally, when the receiving device monitors, by using the destination identifier, the newly transmitted data or the retransmitted data on the sidelink resource, the receiving device starts a timer harqRTT-Timer corresponding to a HARQ process of the newly transmitted data or the retransmitted data. Optionally, the terminal device may stop a timer harqRetx-Timer corresponding to the HARQ process. In the foregoing step, the terminal device may start the harqRTT-Timer after a period of time of receiving the newly transmitted data or the retransmitted data on the sidelink resource, for example, after K subframes/slots/symbols, or after the terminal device feeds back NACK. Alternatively, the terminal device may start the harqRTT-Timer only after determining, based on indication information in the SCI, that there is no reserved time and frequency domain resource locations for retransmission after this transmission. When the timer harqRTT-Timer expires, the timer harqRetx-Timer corresponding to the HARQ process is started. Alternatively, after the timer harqRTT-Timer expires and the receiving device fails to parse the currently received data or feeds back NACK, the timer harqRetx-Timer is started. In a running period of the timer harqRetx-Timer, the receiving device continuously monitors data transmission on the sidelink, for example, the SCI and/or the data.

The technical solution provided in this embodiment may also be expanded to the unicast communication mode. For example, the terminal device determines, based on the destination identifier of the unicast service and/or the third mapping relationship, a time domain resource or a frequency domain resource for data transmission of the unicast service. However, this application is not limited thereto.

According to this solution in this application, the receiving device can determine resource location of the broadcast or multicast information based on a broadcast or multicast source device identifier, so that the terminal device may be prevented from monitoring the broadcast or multicast information on all sidelink resources; therefore, energy of the terminal device may be saved.

It should be noted that in a specific implementation, some steps in FIG. 2 and FIG. 4 may be selected for implementation, or a sequence of the steps in the figure may be adjusted for implementation. This is not limited in this application. It should be understood that performing some steps in the figure or adjusting a sequence of the steps for specific implementation falls within the protection scope of this application.

The methods provided in embodiments of this application are described above in detail with reference to FIG. 2 to FIG. 7. Apparatuses provided in embodiments of this application are described below in detail with reference to FIG. 8 and FIG. 9.

FIG. 8 is a schematic block diagram of a communication apparatus according to an embodiment of this application. As shown in FIG. 8, a communication apparatus 1500 may include a processing unit 1510 and a transceiver unit 1520.

In a possible design, the communication apparatus 1500 may correspond to the terminal device A in the foregoing method embodiments, for example, may be a chip disposed (configured) in the terminal device A or the terminal device B.

It should be understood that the communication apparatus 1500 may correspond to the terminal device A in the methods 200 and 400 according to embodiments of this application, and the communication apparatus 1500 may include units configured to perform the method performed by the terminal device A in the method 200 in FIG. 2 and the method 400 in FIG. 4. In addition, the units in the communication apparatus 1500 and the foregoing other operations and/or functions are respectively used to implement corresponding procedures in the method 200 in FIG. 2 and the method 400 in FIG. 4.

For example, when the communication apparatus 1500 is configured to perform the method 200 in FIG. 2, the transceiver unit 1520 may be configured to perform the steps S220, S240, and S270 in the method 200, and the processing unit 1510 may be configured to perform the steps S210 and S260 in the method 200. When the communication apparatus 1500 is configured to perform the method 400 in FIG. 4, the transceiver unit 1520 may be configured to perform the steps S420, S440, and S460 in the method 200, and the processing unit 1510 may be configured to perform the steps S410 and S450 in the method 400. It should be understood that a specific process in which the units perform the foregoing corresponding steps is described in detail in the foregoing method embodiments, and for brevity, details are not described herein.

It should be further understood that when the communication apparatus 1500 is the chip disposed (or configured) in the terminal device, the transceiver unit 1520 in the communication apparatus 1500 may be an input/output interface or circuit in the chip, and the processing unit 1510 in the communication apparatus 1500 may be a processor in the chip.

Optionally, the communication apparatus 1500 may further include a processing unit 1510. The processing unit 1510 may be configured to process instructions or data, to implement a corresponding operation.

Optionally, the communication apparatus 1500 may further include a storage unit. The storage unit may be configured to store instructions or data. The processing unit 1510 may execute the instructions or the data stored in the storage unit, to enable the communication apparatus to implement a corresponding operation. The transceiver unit 1520 in the communication apparatus 1500 in the communication apparatus 1500 may correspond to a transceiver 1610 in a terminal device 1600 shown in FIG. 9. The storage unit may correspond to a memory in the terminal device 1600 shown in FIG. 9.

It should be understood that a specific process in which the units perform the foregoing corresponding steps is described in detail in the foregoing method embodiments, and for brevity, details are not described herein.

It should be further understood that when the communication apparatus 1500 is the terminal device A, the transceiver unit 1520 in the communication apparatus 1500 may be implemented by using a communication interface (for example, a transceiver or an input/output interface), for example, may correspond to a transceiver 1610 in a terminal device 1600 shown in FIG. 9, and the processing unit 1510 in the communication apparatus 1500 may be implemented by using at least one processor, for example, may correspond to a processor 1620 in the terminal device 1600 shown in FIG. 9, or the processing unit 1510 in the communication apparatus 1500 may be implemented by using at least one logical circuit.

In another possible design, the communication apparatus 1500 may correspond to the terminal device B or the terminal device C in the foregoing method embodiments, may be a chip disposed (configured) in the terminal device B or the terminal device C, or may be a chip disposed in the terminal device B.

It should be understood that the communication apparatus 1500 may correspond to the terminal device B or the terminal device C in the methods 200 and 400 according to embodiments of this application, and the communication apparatus 1500 may include units configured to perform the method performed by the terminal device B or the terminal device C in the method 200 in FIG. 2 and the method 400 in FIG. 4. In addition, the units in the communication apparatus 1500 and the foregoing other operations and/or functions are respectively used to implement the corresponding procedures in the method 200 in FIG. 2 and the method 400 in FIG. 4.

For example, when the communication apparatus 1500 is configured to perform the method 200 in FIG. 2, the transceiver unit 1520 may be configured to perform the steps S220, S240, S250, and S270 in the method 200, and the processing unit 1510 may be configured to perform the step S230 in the method 200. When the communication apparatus 1500 is configured to perform the method 400 in FIG. 4, the transceiver unit 1520 may be configured to perform the steps S420, S440, and S460 in the method 200, and the processing unit 1510 may be configured to perform the step S430 in the method 400. It should be understood that a specific process in which the units perform the foregoing corresponding steps is described in detail in the foregoing method embodiments, and for brevity, details are not described herein.

It should be further understood that when the communication apparatus 1500 is the chip disposed (or configured) in the terminal device, the transceiver unit 1520 in the communication apparatus 1500 may be an input/output interface or circuit in the chip, and the processing unit 1510 in the communication apparatus 1500 may be a processor in the chip.

Optionally, the communication apparatus 1500 may further include a processing unit 1510. The processing unit 1510 may be configured to process instructions or data, to implement a corresponding operation.

Optionally, the communication apparatus 1500 may further include a storage unit. The storage unit may be configured to store instructions or data. The processing unit 1510 may execute the instructions or the data stored in the storage unit, to enable the communication apparatus to implement a corresponding operation. The transceiver unit 1520 in the communication apparatus 1500 in the communication apparatus 1500 may correspond to a transceiver 1610 in a terminal device 1600 shown in FIG. 9. The storage unit may correspond to a memory in the terminal device 1600 shown in FIG. 9.

It should be understood that a specific process in which the units perform the foregoing corresponding steps is described in detail in the foregoing method embodiments, and for brevity, details are not described herein.

It should be further understood that when the communication apparatus 1500 is the terminal device B or the terminal device C, the transceiver unit 1520 in the communication apparatus 1500 may be implemented by using a communication interface (for example, a transceiver or an input/output interface), for example, may correspond to a transceiver 1610 in a terminal device 1600 shown in FIG. 9, and the processing unit 1510 in the communication apparatus 1500 may be implemented by using at least one processor, for example, may correspond to a processor 1620 in the terminal device 1600 shown in FIG. 9, or the processing unit 1510 in the communication apparatus 1500 may be implemented by using at least one logical circuit.

In another possible design, the communication apparatus 1500 may correspond to the network device in the foregoing method embodiments, for example, may be a chip disposed (configured) in the network device or the terminal device B.

It should be understood that the communication apparatus 1500 may correspond to the network device in the method 200 according to embodiments of this application, and the communication apparatus 1500 may include a unit configured to perform the method performed by the network device in the method 200 in FIG. 2. In addition, the units in the communication apparatus 1500 and the foregoing other operations and/or functions are respectively used to implement the corresponding procedures in the method 200 in FIG. 2.

For example, when the communication apparatus 1500 is configured to perform the method 200 in FIG. 2, the transceiver unit 1520 may be configured to perform the step S250 in the method 200. It should be understood that a specific process in which the units perform the foregoing corresponding steps is described in detail in the foregoing method embodiments, and for brevity, details are not described herein.

It should be further understood that when the communication apparatus 1500 is the chip disposed (or configured) in the network device, the transceiver unit 1520 in the communication apparatus 1500 may be an input/output interface or circuit in the chip, and the processing unit 1510 in the communication apparatus 1500 may be a processor in the chip.

Optionally, the communication apparatus 1500 may further include a processing unit 1510. The processing unit 1510 may be configured to process instructions or data, to implement a corresponding operation.

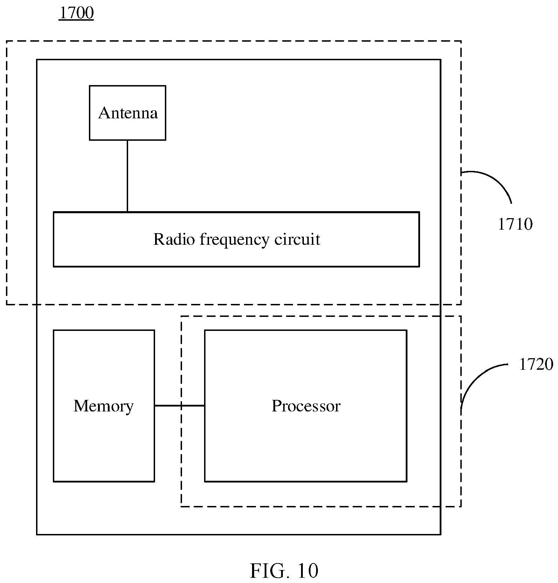

Optionally, the communication apparatus 1500 may further include a storage unit. The storage unit may be configured to store instructions or data. The processing unit 1510 may execute the instructions or the data stored in the storage unit, to enable the communication apparatus to implement a corresponding operation. The transceiver unit 1520 in the communication apparatus 1500 in the communication apparatus 1500 may correspond to a transceiver 1710 in a network device 1700 shown in FIG. 10. The storage unit may correspond to a memory in the network device 1700 shown in FIG. 10.

It should be understood that a specific process in which the units perform the foregoing corresponding steps is described in detail in the foregoing method embodiments, and for brevity, details are not described herein.

It should be further understood that when the communication apparatus 1500 is the network device, the transceiver unit 1520 in the communication apparatus 1500 may be implemented by using a communication interface (for example, a transceiver or an input/output interface), for example, may correspond to the transceiver 1710 in the network device 1700 shown in FIG. 10. The processing unit 1510 in the communication apparatus 1500 may be implemented by using at least one processor, for example, may correspond to the processor 1720 in the network device 1700 shown in FIG. 10. The processing unit 1510 in the communication apparatus 1500 may be implemented by using at least one logical circuit.

FIG. 9 is a schematic diagram of a structure of a terminal device 1600 according to an embodiment of this application. The terminal device 1600 may be used in the system shown in FIG. 1, to perform functions of the terminal device in the foregoing method embodiments. As shown in the figure, the terminal device 1600 includes a processor 1620 and a transceiver 1610. Optionally, the terminal device 1600 further includes a memory. For example, the processor 1620, the transceiver 1610, and the memory may communicate with each other through an internal connection path, to transfer a control signal and/or a data signal. The memory is configured to store a computer program. The processor 1620 is configured to execute the computer program in the memory, to control the transceiver 1610 to receive and send a signal. Optionally, the terminal device 1600 may include a bus system 1640. Information may be transmitted among the transceiver 1610, the processor 1620, and the memory 1630 by using the bus system.

The processor 1620 and the memory may be integrated into a processing apparatus, and the processor 1620 is configured to execute program code stored in the memory to implement the foregoing functions. During specific implementation, the memory may be integrated into the processor 1620, or independent of the processor 1620. The processor 1620 may correspond to the processing unit in FIG. 8.

The transceiver 1610 may correspond to the transceiver unit in FIG. 8. The transceiver 1610 may include a receiver (or referred to as a receiver machine or a receiver circuit) and a transmitter (or referred to as a transmitter machine or a transmitter circuit). For example, the receiver is configured to receive a signal, and the transmitter is configured to transmit a signal.

It should be understood that the terminal device 1600 shown in FIG. 9 can implement the processes related to the terminal device in the method embodiments in FIG. 2 and FIG. 4. Operations and/or functions of modules in the terminal device 1600 are used to implement corresponding procedures in the foregoing method embodiments. For details, refer to the descriptions in the foregoing method embodiments. To avoid repetition, detailed descriptions are properly omitted herein.

The processor 1620 may be configured to perform an action that is implemented inside the terminal device and that is described in the foregoing method embodiments. The transceiver 1610 may be configured to perform a sending action by the terminal device for the network device or a receiving operation from the network device in the foregoing method embodiments. For details, refer to the descriptions in the foregoing method embodiments. Details are not described herein.

Optionally, the terminal device 1600 may further include a power supply, configured to supply power to various components or circuits in the terminal device.

In addition, to make functions of the terminal device more perfect, the terminal device 1600 may further include one or more of an input unit, a display unit, an audio circuit, a camera, a sensor, and the like, and the audio circuit may further include a speaker, a microphone, and the like.

FIG. 10 is a schematic diagram of a structure of a network device 1700 according to an embodiment of this application. The network device 1700 may be used in the system shown in FIG. 1, to perform functions of the terminal device in the foregoing method embodiments. As shown in the figure, the network device 1700 includes a processor 1720 and a transceiver 1710. Optionally, the network device 1700 further includes a memory. For example, the processor 1720, the transceiver 1710, and the memory may communicate with each other through an internal connection path, to transfer a control signal and/or a data signal. The memory is configured to store a computer program. The processor 1720 is configured to execute the computer program in the memory, to control the transceiver 1710 to receive and send a signal. Optionally, the transceiver 1710 of the network device 1700 may include an antenna and/or a radio frequency circuit.

It should be understood that, the network device 1700 shown in FIG. 10 can implement the processes related to the network device in the method embodiments in FIG. 2 and FIG. 4. Operations and/or functions of modules in the network device 1700 are used to implement corresponding procedures in the foregoing method embodiments. For details, refer to the descriptions in the foregoing method embodiments. To avoid repetition, detailed descriptions are properly omitted herein.

It should be understood that, the network device 1700 shown in FIG. 10 is merely a possible architecture of the network device, and this shall not constitute any limitation on this application. The method provided in this application is applicable to a network device in another architecture, for example, a network device including a CU, a DU, and an AAU. A specific architecture of the network device is not limited in this application.

An embodiment of this application further provides a processing apparatus, including a processor and an interface. The processor is configured to perform the method in any one of the foregoing method embodiments.

It should be understood that the processing apparatus may be one or more chips. For example, the processing apparatus may be a field programmable gate array (field programmable gate array, FPGA), an application-specific integrated circuit (application-specific integrated circuit, ASIC), a system on chip (system on chip, SoC), a central processor unit (central processor unit, CPU), a network processor (network processor, NP), a digital signal processing circuit (digital signal processor, DSP), a micro controller unit (micro controller unit, MCU), a programmable logic device (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. For example, the nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the methods provided in embodiments of this application, this application further provides a computer program product. The computer program product includes computer program code. When the computer program code is executed by one or more processors, an apparatus including the processor is enabled to perform the methods in the embodiments shown in FIG. 2 and FIG. 4.

According to the methods provided in embodiments of this application, this application further provides a computer-readable storage medium. The computer-readable storage medium stores program code. When the program code is executed by one or more processors, an apparatus including the processor is enabled to perform the methods in the embodiments shown in FIG. 2 and FIG. 4.

According to the methods provided in embodiments of this application, this application further provides a system, including the foregoing one or more network devices. The system may further include the foregoing one or more terminal devices.

The network device and the terminal device in the foregoing apparatus embodiments correspond to the network device and the terminal device in the method embodiments. A corresponding module or unit performs a corresponding step. For example, the communication unit (the transceiver) performs a receiving or sending step in the method embodiments, and a step other than the sending step and the receiving step may be performed by the processing unit (the processor). For a function of a specific unit, refer to a corresponding method embodiment. For example, there may be one or more processors.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disc, SSD)), or the like.

The network device and the terminal device in the foregoing apparatus embodiments correspond to the network device and the terminal device in the method embodiments. A corresponding module or unit performs a corresponding step. For example, the communication unit (the transceiver) performs a receiving or sending step in the method embodiments, and a step other than the sending step and the receiving step may be performed by the processing unit (the processor). For a function of a specific unit, refer to a corresponding method embodiment. There may be one or more processors.

Further embodiments of the present invention are provided in the following. It should be noted that the numbering used in the following section does not necessarily need to comply with the numbering used in the previous sections.

Embodiment 1. A wireless communication method, comprising:

determining, by a first terminal device, first configuration information of first discontinuous reception DRX, wherein the first DRX is used to control the first terminal device to receive data on a sidelink; and
sending, by the first terminal device, the first configuration information to a second terminal device, wherein the second terminal device is a terminal device that establishes a sidelink connection to the first terminal device.

Embodiment 2. The method according to embodiment 1, wherein the first configuration information comprises one or more of the following information elements:

a first DRX cycle, a start offset of the first DRX, a slot offset of the first DRX, information about a first timer, or information about a second timer, wherein
the information about the first timer is used to configure DRX activation duration in each first DRX cycle, and the information about the second timer is used to configure DRX activation duration after the first terminal device receives sidelink transmission.

Embodiment 3. The method according to embodiment 1, wherein the determining, by a first terminal device, first configuration information of first discontinuous reception DRX comprises:
determining, by the first terminal device, the first configuration information from one or more pieces of configuration information of the first DRX, wherein the one or more pieces of configuration information is preset for a first terminal device or is configured by a network device for the first terminal device.

Embodiment 4. The method according to embodiment 3, wherein the determining, by the first terminal device, the first configuration information from one or more pieces of configuration information of the first DRX comprises:
determining, by the first terminal device, the first configuration information from one or more pieces of DRX configuration information used for sidelink based on a QoS requirement of a sidelink service.

Embodiment 5. The method according to any one of embodiments 1 to 4, wherein the method further comprises:
receiving, by the first terminal device, second configuration information of the first DRX that is sent by the second terminal device, wherein the second configuration information comprises configuration information related to a hybrid automatic repeat request HARQ.

Embodiment 6. The method according to any one of embodiments 1 to 5, wherein the method comprises: when one or more of the following conditions are met, starting to perform, by the first terminal device, a first DRX operation:

after the first configuration information is sent;
after an acknowledgment feedback that the second terminal device receives the first configuration information is received;
after first indication information is sent to the second terminal device, wherein the first indication information indicates to start performing the first DRX;
after the second configuration information that is sent by the second terminal device is received; and
after an acknowledgment feedback that the second configuration information is received is sent to the second terminal device, wherein
the second configuration information comprises the HARQ-related configuration information.

Embodiment 7. The method according to embodiment 5 or 6, wherein the second configuration information comprises information about a third timer and/or information about a fourth timer, wherein the information about the third timer indicates minimum duration of next data retransmission in a same HARQ process, and the information about the fourth timer indicates maximum duration of detecting and/or receiving retransmitted data.

Embodiment 8. The method according to any one of embodiments 5 to 7, wherein the method further comprises:
storing, by the first terminal device, the second configuration information in context information of the second terminal device.

Embodiment 9. The method according to embodiment 7, wherein after the starting to perform, by the first terminal device, a first DRX operation, the first terminal device is in the DRX activation time in one or more of the following cases:
a running period of the first timer, a running period of the second timer, a running period of the fourth timer, a moment of receiving HARQ feedback of the sidelink, a time range of a data retransmission resource, a waiting period of receiving a channel state information CSI report, or a moment when receiving a unicast establishment request and before completing unicast establishment, or after receiving the unicast establishment request.

Embodiment 10. The method according to embodiment 5, wherein the sending, by the first terminal device, the first configuration information to a second terminal device comprises:

sending, by the first terminal device, the first configuration information to a plurality of second terminal devices; and
the receiving, by the first terminal device, second configuration information of the first DRX that is sent by the second terminal device comprises:
receiving, by the first terminal device, a plurality of pieces of second configuration information sent by the plurality of second terminal devices, wherein the plurality of pieces of second configuration information one-to-one correspond to the plurality of second terminal devices, and the second configuration information specifically comprises configuration information related to a HARQ process of the second terminal device.

Embodiment 11. The method according to embodiment 10, wherein when identifiers of two second terminal devices in the plurality of second terminal devices are both first identifiers, the method further comprises:

sending, by the first terminal device, second indication information to one of the two second terminal devices, wherein the second indication information indicates the one second terminal device to update the identifier; updating, by the first terminal device, an identifier that is of the first terminal device and that is used when the first terminal device communicates with the one of the two second terminal devices into a second identifier; and sending, by the first terminal device, third indication information to the one second terminal device, wherein the third indication information indicates to update the identifier of the first terminal device into the second identifier.

Embodiment 12. A wireless communication method, comprising:

receiving, by a second terminal device, first configuration information of first discontinuous reception DRX that is sent by a first terminal device, wherein the first DRX is used to control the first terminal device to receive data on a sidelink; and
sending, by the second terminal device, data on a sidelink to the first terminal device based on the first configuration information.

Embodiment 13. The method according to embodiment 12, wherein the first configuration information comprises one or more of the following information elements:

a first DRX cycle, a start offset of the first DRX, a slot offset of the first DRX, information about a first timer, or information about a second timer, wherein
the information about the first timer is used to configure DRX activation duration in each first DRX cycle, and the information about the second timer is used to configure DRX activation duration after the first terminal device receives control information for scheduling newly transmitted data.

Embodiment 14. The method according to embodiment 12 or 13, wherein the method further comprises:
sending, by the second terminal device, second configuration information of the first DRX to the first terminal device, wherein the second configuration information comprises configuration information related to a hybrid automatic repeat request HARQ.
Embodiment 15. The method according to embodiment 14, wherein the second configuration information comprises information about a third timer and/or information about a fourth timer, wherein the information about the third timer indicates minimum duration of next data retransmission in a same HARQ process, and the information about the fourth timer indicates maximum duration of detecting and/or receiving retransmitted data.
Embodiment 16. The method according to embodiment 14 or 15, wherein the second configuration information is preset for a second terminal device or is configured by a network device for the second terminal device; or
the second configuration information is determined by the second terminal device based on information related to the second terminal device, and the related information comprises one or more of a channel busy ratio CBR, a speed, and a QoS requirement of a service.
Embodiment 17. The method according to any one of embodiments 12 to 16, wherein the method further comprises:
storing, by the second terminal device, the first configuration information in context information of the first terminal device.
Embodiment 18. The method according to any one of embodiments 12 to 17, wherein the method further comprises:
wherein when one or more of the following conditions are met, starting to perform, by the second terminal device, a first DRX operation:

after the first configuration information is received;
after an acknowledgment feedback that the second terminal device receives the first configuration information is sent;
after first instruction information is received, wherein the first instruction information indicates to activate the first DRX;
after the second configuration information is sent to the first terminal device; and
after an acknowledgment feedback that the second configuration information is received and that is sent by the first terminal device is received, wherein
the second configuration information comprises the HARQ-related configuration information.

Embodiment 19. The method according to any one of embodiments 12 to 18, wherein the method further comprises:
determining, by the second terminal device, that the first terminal device is in DRX activation time in one or more of the following cases, and sending, by the second terminal device, data to the first terminal device when the first terminal device is in a receiving state:
a running period of the first timer, a running period of the second timer, a running period of the fourth timer, a moment of receiving HARQ feedback of the sidelink, a time range of a data retransmission resource, a waiting period of receiving a channel state information CSI report, or a moment when receiving a unicast establishment request and before completing unicast establishment, or before starting to perform the first DRX operation.

Embodiment 20. The method according to embodiment 19, wherein the method further comprises:

receiving, by the second terminal device, second indication information that is sent by the first terminal device, wherein the second indication information indicates the second terminal device to update an identifier; or receiving, by the second terminal device, third indication information that is sent by the first terminal device, wherein the third indication information indicates to update an identifier of the first terminal device into a second identifier.

Embodiment 21. The method according to any one of embodiments 14 to 16, wherein the second terminal device sends the first configuration information and/or the second configuration information to the network device.

Embodiment 22. A wireless communication method, comprising:

receiving, by a network device, first configuration information and/or second configuration information that are/is sent by a second terminal device, wherein the first configuration information and/or the second configuration information are/is configuration information of first DRX, the first DRX is used to control the first terminal device to receive data on a sidelink, the first configuration information is configuration information of the first DRX that is determined by the first terminal device, and the second configuration information is configuration information of the first DRX that is determined by the second terminal device; and sending, by the network device, fourth indication information to the second terminal device, wherein the fourth indication information indicates a first time-frequency resource, the first time-frequency resource is a resource used by the second terminal device to send data to the first terminal device, and the first time-frequency resource is in activation time of the first DRX of the first terminal device.

Embodiment 23. The method according to embodiment 22, wherein the first configuration information comprises one or more of the following information elements:

a first DRX cycle, a start position offset of the first DRX, information about a first timer, or information about a second timer, wherein the information about the first timer indicates DRX activation duration in each first DRX cycle, and the information about the second timer indicates DRX activation duration after the first terminal device receives control information for scheduling newly transmitted data.

Embodiment 24. The method according to embodiment 22 or 23, wherein the second configuration information comprises information about a third timer and/or information about a fourth timer, wherein the information about the third timer indicates minimum duration of next data retransmission in a same HARQ process, and the information about the fourth timer indicates maximum duration of detecting and/or receiving retransmitted data.

Embodiment 25. A wireless communication method, comprising:

determining, by a first terminal device based on a destination identifier of broadcast service or multicast service, a first resource that is used to carry data of the broadcast service or the multicast service; and receiving or sending, by the first terminal device, the data of the broadcast service or the multicast service on the first resource.

Embodiment 26. The method according to embodiment 25, wherein the determining, by a first terminal device based on a destination identifier of broadcast service or multicast service, a first resource that is used to carry data of the broadcast service or the multicast service comprises:

determining, by the first terminal device based on the destination identifier of the broadcast service or the multicast service and a third mapping relationship, the first resource that is used to carry the data of the broadcast service or the multicast service, wherein the third mapping relationship comprises one or more of the following:

destination identifier mod N1 = (time domain resource number/K1) mod M1; and destination identifier mod N2 = (frequency domain resource number/K2) mod M2, wherein mod represents a modulo value, and one or more of N1, N2, K1, K2, M1, or M2 are parameter values that are predefined in a protocol, configured by a network device by using an RRC dedicated message, or configured by the network device by using a system message.

Embodiment 27. A communication apparatus, comprising at least one processor that is coupled to a memory, wherein

the memory is configured to store a program or instructions; and
the at least one processor is configured to execute the program or the instructions, to perform the method by using the apparatus according to any one of embodiments 1 to 26.

Embodiment 28. A computer-readable storage medium, comprising a computer program, wherein when the computer program is run by one or more processors, an apparatus comprising the processor is enabled to perform the method according to any one of claims 1 to 26.

Embodiment 29. A chip, comprising at least one processor and a communication interface, wherein
the communication interface is configured to receive a signal input to the chip or a signal output from the chip, and
the processor communicates with the communication interface and performs the method according to any one of claims 1 to 26 by using a logic circuit or executing a code instruction.

Embodiment 30. A computer program product, wherein the computer program product comprises a computer program, and when the computer program is run on a computer, the computer is enabled to perform the method according to any one of claims 1 to 26

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into o

In the foregoing embodiments, all or some of the functions of the function units may be implemented by using software, hardware, firmware, or any combination thereof. When software is used to implement the embodiments, all or a part of the embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A wireless communication method, comprising:
   a first terminal device is in the DRX active time in one or more of the following cases:

   a period of waiting to receive a channel state information CSI report, a period of receiving a unicast setup request and before the interactive DRX configuration is complete, a period of sending a unicast connection setup request and before the interactive DRX configuration is complete, a period of sending a first request message and before receiving a response message of the first request message;
   monitoring, by the first terminal device, sidelink control information SCI within the active time.

2. The method according to claim 1, wherein the method further comprises:

   receiving, by the first terminal device within the DRX active time, SCI sent by a second terminal device, wherein data transmitted on the SCI is data of the first terminal device, and the SCI indicates that the second terminal device reserves a retransmission resource for the first terminal device; and
   determining, by the first terminal device, a time length of a timer based on a time interval between a current transmission resource and a next transmission resource that is indicated by the SCI, wherein the timer is used to control a minimum length of a time before next data retransmission in a same HARQ process.

3. The method according to claim 1, wherein the method further comprises:

   receiving, by the first terminal device within the DRX active time, SCI sent by a second terminal device, wherein data transmitted on the SCI is data of the first terminal device, and the SCI indicates that the second terminal device does not reserve a retransmission resource for the first terminal device; and
   determining, by the first terminal device, duration of a timer based on configuration information received from the second terminal device, wherein the configuration information comprises information about the timer, and the timer is used to control a distance from next data retransmission in a same HARQ process.

4. An apparatus, wherein the apparatus is configured to perform the method according to any one of claims 1 to 3.

5. A computer readable storage medium comprising an instruction, wherein which, when executed by a computer device, cause the computer device to perform the method according to any one of claims 1 to 3.

6. A computer program product, comprising an instruction, wherein which, when executed by a computer device, cause the computer device to perform the method according to any one of claims 1 to 3.

100

FIG. 1

200

```
┌──────────────┐        ┌──────────────┐        ┌ ─ ─ ─ ─ ─ ─ ─ ┐
│   Terminal   │        │   Terminal   │          │   Network   │
│   device A   │        │   device B   │          │   device    │
└──────────────┘        └──────────────┘        └ ─ ─ ─ ─ ─ ─ ─ ┘
```

S210: Determine first configuration information of first DRX

S220: Send the first configuration information

S230: Determine second configuration information of the first DRX

S240: Send the second configuration information

S250: Send indication information C, where the indication information C indicates the first configuration information and/or the second configuration information of the terminal device A

S260: Start to perform a first DRX operation

S270: Send SCI and/or data in activation time of the first DRX

FIG. 2

SCI indicates
newly transmitted
data and reserves a
retransmission
resource

FIG. 3

400

| Terminal device A | Terminal device B | Terminal device C |

S410: Determine first configuration information of first DRX

S420: Send the first configuration information

S430: Determine configuration information B of the first DRX

S430: Determine configuration information C of the first DRX

S440: Send second configuration information b

S440: Send second configuration information c

S450: Start to perform a first DRX operation

S460: Send SCI and/or data in activation time of the first DRX

S460: Send SCI and/or data in activation time of the first DRX

FIG. 4

SCI 2 that is sent by a
terminal device B
indicates newly
transmitted data and
reserves a
retransmission
resource

SCI 1 that is sent by
a terminal device C
indicates newly
transmitted data 1
and reserves a
retransmission
resource

Fourth timer b

Third timer b

Fourth timer c

Third timer c

Second timer

First timer

t1    t2      t3                   First DRX cycle

FIG. 5

☐ Subframe          ▨ Sidelink resource

        0  1  2  3  4                    0  1  2  3  4

Subframe
index:    0  1  2  3  4  5  6  7  8  9  0  1  2  3  4  5  6  7  8  9

        ◄─────── Radio frame ───────►

FIG. 6

☐ Subframe ▨ Sidelink resource

**Numbering cycle T**

| | 0 | 1 | 2 | 3 | 4 | | | | | 5 | 6 | 7 | 8 | 9 | | | | |

Subframe index:

| 0 | 1 | 2 | 3 | 4 | 5 | 6 | 7 | 8 | 9 | 0 | 1 | 2 | 3 | 4 | 5 | 6 | 7 | 8 | 9 |

◄——— SFN = 0 or DFN = 0 ———► ◄——— SFN = 1 or DFN = 1 ———►

FIG. 7

Communication apparatus 1500

Processing unit 1510

Transceiver unit 1520

FIG. 8

1620
Processor

1640
Bus system

1610
Transceiver

1630
Memory

FIG. 9

<u>1700</u>

```
┌ ─ ─ ─ ─ ─ ─ ─ ─ ─ ─ ─ ─ ─ ─ ─ ─ ─ ─ ─ ─ ┐
│  ┌──────────────────────────────────┐    │
│  │   ┌──────────┐                    │    │
│  │   │ Antenna  │                    │    │
│  │   └────┬─────┘                    │    │
│  │        │                          │    │⟍  1710
│  │   ┌────┴───────────────────────┐  │    │
│  │   │   Radio frequency circuit  │  │    │
│  │   └────────────────────────────┘  │    │
└ ─│─ ─ ─ ─ ─ ─ ─ ─ ─ ─ ─ ─ ─ ─ ─ ─ ─ ┼ ─ ─┘
   │  ┌ ─ ─ ─ ─ ─ ─ ─ ─ ─ ─ ─ ─ ─ ─ ┐ │
   │  │ ┌─────────┐                  │ │ ⟍ 1720
   │  │ │         │   ┌───────────┐  │ │
   │  │ │ Memory  ├───┤ Processor │  │ │
   │  │ │         │   └───────────┘  │ │
   │  │ └─────────┘                  │ │
   │  └ ─ ─ ─ ─ ─ ─ ─ ─ ─ ─ ─ ─ ─ ─ ┘ │
   └──────────────────────────────────┘
```

FIG. 10

**REFERENCES CITED IN THE DESCRIPTION**

**Patent documents cited in the description**

- CN 202010162922